# EUROPEAN PATENT APPLICATION

(11) **EP 4 443 427 A1**
(43) Date of publication of application: **09.10.2024**
(21) Application number: 22901337.0
(22) Date of filing: 29.11.2022
(51) Int. Cl.: G10L 17/00, G10L 17/02

(54) **AUTHENTICATION DEVICE AND AUTHENTICATION METHOD**

(30) Priority: 03.12.2021 JP 2021197229
(71) Applicant: PANASONIC INTELLECTUAL PROPERTY MANAGEMENT CO., LTD., Kadoma-shi Osaka 571-0057 (JP)
(72) Inventor: OKADA Shintaro, Kadoma-shi, Osaka 571-0057 (JP); FUKUDA Teppei, Kadoma-shi, Osaka 571-0057 (JP); MIYAMOTO Masanari, Kadoma-shi, Osaka 571-0057 (JP)
(74) Representative: Eisenführ Speiser
(86) International application number: PCT/JP2022/044069
(87) International publication number: WO 2023/100905

(57) **Abstract**

An authentification device includes an acquisition unit configured to acquire and detect a voice signal of an utterance voice of a speaker, an authentication unit configured to authenticate whether the speaker is the person himself/herself based on collation between the voice signal detected by the acquisition unit and a database, and a display interface configured to display, on a terminal device, an authentication status indicating whether the speaker is the person himself/herself based on an authentication result of the authentication unit, in which the display interface updates a display content of the authentication status of the speaker by the authentication unit every time the authentication status changes.

## Description

### TECHNICAL FIELD

The present disclosure relates to an authentification device and an authentification method.

### BACKGROUND ART

Patent Literature 1 discloses an operator identity confirmation system in which an identity confirmation work of a customer of an operator and another confirmation work are made efficient in a call center. In the operator identity confirmation system, a voice recognition server performs voice recognition and text output of an utterance of the customer and the operator, and stores the text of a voice recognition result and date and time information together with utterances of the customer and the operator. Next, a key word extraction unit of an analysis server reads the text of the voice recognition result and extracts a key word of a confirmation item included in a set of the utterances of the customer and the operator from a predetermined confirmation item key word list. Next, a key word comparison unit of the analysis server compares a key word of the extracted confirmation item with member basic information of the customer stored in a member master DB. If the two match, it is determined that the confirmation of the confirmation item is completed. When the confirmation of all the predetermined identity confirmation items is completed, an identity confirmation completion notification is displayed on an operator terminal. The identity confirmation completion notification is also transmitted to a customer terminal.

### CITATION LIST

### PATENT LITERATURE

Patent Literature 1: JP2014-197140A

### SUMMARY OF INVENTION

### TECHNICAL PROBLEM

In Patent Literature 1, until the determination of the confirmation of all the identity confirmation items prepared in advance for the identity confirmation work is completed, the display that the identity confirmation has been completed is not displayed on the terminal of the operator. For this reason, until the confirmation of all the identity confirmation items is determined, a progress status of an authentication process for authenticating whether a conversation partner of the operator is a legitimate customer (that is, the person himself/herself) is not displayed in real time, and there is no operation for grasping the degree of progress of the authentication process. For this reason, there is a problem that a timing of an operator conversation on a main topic content, which begins after the completion of the identity confirmation of the customer, is delayed, resulting in poor work efficiency of the operator.

The present disclosure is made in view of the aforementioned situation of related art, and an object of the present disclosure is to provide an authentification device and an authentification method that enable an operator to confirm an authentication status of identity confirmation of a customer in real time and support improvement of work efficiency of the operator.

### SOLUTION TO PROBLEM

The present disclosure provides an authentification device including: an acquisition unit configured to acquire and detect a voice signal of an utterance voice of a speaker; an authentication unit configured to authenticate whether the speaker is the person himself/herself based on collation between the voice signal detected by the acquisition unit and a database; and a display interface configured to display, on a terminal device, an authentication status indicating whether the speaker is the person himself/herself based on an authentication result of the authentication unit, in which the display interface updates a display content of the authentication status of the speaker by the authentication unit every time the authentication status changes.

The present disclosure provides an authentification method performed by one or more computers, the authentification method includes: acquiring and detecting a voice signal of an utterance voice of a speaker; authenticating whether the speaker is the person himself/herself based on collation between the voice signal detected by the acquisition unit and a database; displaying an authentication status indicating whether the speaker is the person himself/herself based on an authentication result; and updating a display content of the authentication status every time the authentication status of the speaker changes.

These comprehensive or specific aspects may be implemented by a system, a device, a method, an integrated circuit, a computer program, or a recording medium, and may be implemented by any combination of the system, the device, the method, the integrated circuit, the computer program, and the recording medium.

### ADVANTAGEOUS EFFECTS OF INVENTION

According to the present disclosure, an operator can confirm an authentication status of identity confirmation of a customer in real time, and the improvement of work efficiency of the operator can be supported.

### BRIEF DESCRIPTION OF DRAWINGS

[FIG. 1] FIG. 1 is a diagram showing an example of a use case of a voice authentication system according to Embodiments 1 and 2.
[FIG. 2] FIG. 2 is a block diagram showing an internal configuration example of an authentication analysis device according to Embodiment 1.
[FIG. 3] FIG. 3 is a diagram showing a first relation between a voice signal and reliability according to Embodiment 1.
[FIG. 4] FIG. 4 is a diagram showing a second relation between the voice signal and the reliability according to Embodiment 1.
[FIG. 5] FIG. 5 is a diagram showing an example in which authentication is started after an authentication start button is pressed according to Embodiment 1.
[FIG. 6A] FIG. 6A is a diagram showing the presence or absence of an emotion of the voice signal according to Embodiment 1.
[FIG. 6B] FIG. 6B is a diagram showing processing of a voice signal according to the presence or absence of an emotion according to Embodiment 1.
[FIG. 7] FIG. 7 is a diagram showing a process of deleting repetition sections of the voice signal according to Embodiment 1.
[FIG. 8] FIG. 8 is a diagram showing a first screen example representing an authentication status according to Embodiment 1.
[FIG. 9] FIG. 9 is a diagram showing a second screen example representing the authentication status according to Embodiment 1.
[FIG. 10] FIG. 10 is a flowchart showing an operation procedure example of the authentication analysis device according to Embodiment 1.
[FIG. 11] FIG. 11 is a block diagram showing an internal configuration example of an authentication analysis device according to Embodiment 2.
[FIG. 12] FIG. 12 is a diagram showing question examples according to Embodiment 2.
[FIG. 13] FIG. 13 is a diagram showing a question example sentence displayed on an information terminal device according to Embodiment 2.
[FIG. 14] FIG. 14 is a diagram showing a relation between the number of phonemes and a threshold value according to Embodiment 2.
[FIG. 15] FIG. 15 is a flowchart showing an operation procedure example of the authentication analysis device when a question example sentence is displayed immediately after the start of authentication according to Embodiment 2.
[FIG. 16] FIG. 16 is a diagram showing a screen example when a question example sentence display function according to Embodiment 2 is off.
[FIG. 17] FIG. 17 is a diagram showing a screen example when the question example sentence display function according to Embodiment 2 is on.
[FIG. 18] FIG. 18 is a flowchart showing an operation procedure example of the authentication analysis device when a question example sentence is displayed during authentication of identity confirmation according to Embodiment 2.

### DESCRIPTION OF EMBODIMENTS

Hereinafter, embodiments in which an authentification device and an authentification method are specifically disclosed in the present disclosure will be described in detail with reference to the drawings as appropriate. However, unnecessarily detailed description may be omitted. For example, detailed description of already well-known matters and redundant description of substantially the same configuration may be omitted. This is to avoid unnecessary redundancy of the following description and to facilitate understanding of those skilled in the art. The accompanying drawings and the following description are provided for those skilled in the art to sufficiently understand the present disclosure, and are not intended to limit the subject matter described in claims.

### (Background of Embodiment 1)

Patent Literature 1 discloses an operator identity confirmation system in which an identity confirmation work of a customer of an operator and another confirmation work are made efficient in a call center. In the operator identity confirmation system, a voice recognition server performs voice recognition and text output of an utterance of the customer and the operator, and stores the text of a voice recognition result and date and time information together with utterances of the customer and the operator. Next, a key word extraction unit of an analysis server reads the text of the voice recognition result and extracts a key word of a confirmation item included in a set of the utterances of the customer and the operator from a predetermined confirmation item key word list. Next, a key word comparison unit of the analysis server compares a key word of the extracted confirmation item with member basic information of the customer stored in a member master DB. If the two match, it is determined that the confirmation of the confirmation item is completed. When the confirmation of all the predetermined identity confirmation items is completed, an identity confirmation completion notification is displayed on an operator terminal. The identity confirmation completion notification is also transmitted to a customer terminal.

In Patent Literature 1, until the determination of the confirmation of all the identity confirmation items prepared in advance for the identity confirmation work is completed, the display that the identity confirmation has been completed is not displayed on the terminal of the operator. For this reason, until the confirmation of all the identity confirmation items is determined, a progress status of an authentication process for authenticating whether a conversation partner of the operator is a legitimate customer (that is, the person himself/herself) is not displayed in real time, and there is no operation for grasping the degree of progress of the authentication process. For this reason, there is a problem that a timing of an operator conversation on a main topic content, which begins after the completion of the identity confirmation of the customer, is delayed, resulting in poor work efficiency of the operator.

In the following Embodiment 1, an example of an authentification device and an authentification method that enable an operator to confirm an authentication status of identity confirmation of a customer in real time and support improvement of work efficiency of the operator will be described.

### (Embodiment 1)

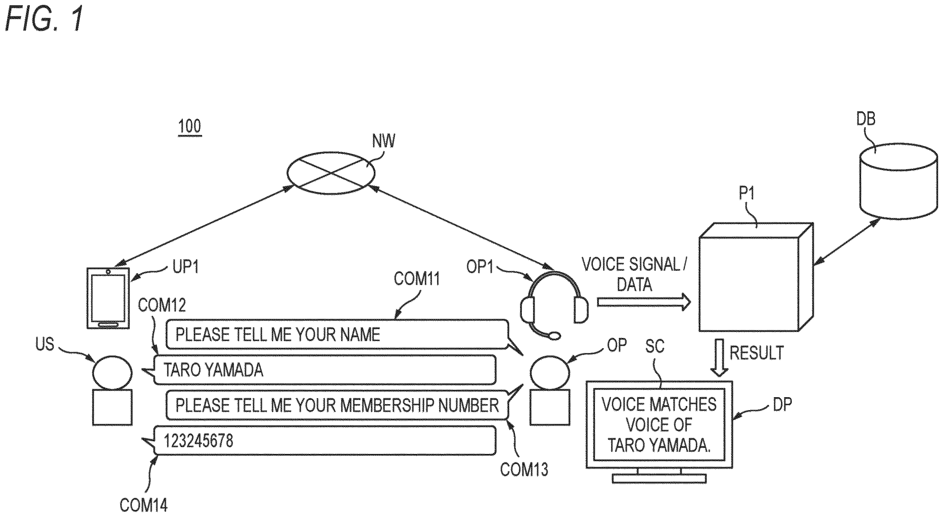

First, a use case of a voice authentication system according to Embodiment 1 and Embodiment 2 (to be described later) will be described with reference to FIG. 1. FIG. 1 is a diagram showing an example of the use case of the voice authentication system according to Embodiment 1 and Embodiment 2. The voice authentication system 100 acquires a voice signal or voice data of a person (a user US in the example shown in FIG. 1) to be verified using a voice, and collates the acquired voice signal or voice data with a plurality of voice signals or a plurality of pieces of voice data registered (stored) in advance in a storage (a registered speaker database DB in the example shown in FIG. 1). Based on the collation result, the voice authentication system 100 evaluates a similarity between the voice signal or the voice data collected from the user US which is a voice authentication target and the voice data and the voice signal registered in the storage, and authenticates the user US based on the evaluated similarity.

The voice authentication system 100 according to Embodiment 1 includes at least an operator-side call terminal OP1 as an example of a voice collection device, an authentication analysis device P1, the registered speaker database DB, and an information display terminal DP as an example of an output device. The authentication analysis device P1 may be integrated with the information display terminal DP.

An example is described in which the voice authentication system 100 shown in FIG. 1 is used for authentication of a speaker (a user US) in a call center, and the voice authentication system 100 authenticates the user US using the voice data obtained by collecting an utterance voice of the user US who is communicating with an operator OP. The voice authentication system 100 shown in FIG. 1 further includes a user-side call terminal UP1 and a network NW. It is needless to say that the overall configuration of the voice authentication system 100 is not limited to the example shown in FIG. 1.

The user-side call terminal UP1 is connected to the operator-side call terminal OP1 via the network NW so as to be able to perform wireless communication. Here, the wireless communication is, for example, network communication via a wireless local area network (LAN) such as Wi-Fi (registered trademark).

The user-side call terminal UP1 is implemented by, for example, a notebook PC, a tablet terminal, a smartphone, and a telephone. The user-side call terminal UP1 is a voice collection device including a microphone (not shown), collects an utterance voice of the user US, converts the voice into a voice signal, and transmits the converted voice signal to the operator-side call terminal OP1 via the network NW. In addition, the user-side call terminal UP 1 acquires a voice signal of an utterance voice of the operator OP transmitted from the operator-side call terminal OP1 and outputs the voice signal from a speaker (not shown).

The network NW is an Internet Protocol (IP) network or a telephone network, and connects the user-side call terminal UP1 and the operator-side call terminal OP1 so as to be able to transmit and receive voice signals. The transmission and reception of data are executed by wired communication or wireless communication.

The operator-side call terminal OP1 is connected to the user-side call terminal UP1 and the authentication analysis device P1 so as to be able to transmit and receive data by wired communication or wireless communication, and transmits and receives voice signals.

The operator-side call terminal OP1 is implemented by, for example, the notebook PC, the tablet terminal, the smartphone, and the telephone. The operator-side call terminal OP1 acquires the voice signal based on the utterance voice of the user US transmitted from the user-side call terminal UP1 via the network NW, and transmits the voice signal to the authentication analysis device P1. When the operator-side call terminal OP1 acquires the voice signals including the acquired utterance voice of the user US and the acquired utterance voice of the operator OP, the operator-side call terminal OP1 may separate the voice signal based on the utterance voice of the user US and the voice signal based on the utterance voice of the operator OP based on voice parameters such as a sound pressure level or a frequency band of the voice signals of the operator-side call terminal OP1. The operator-side call terminal OP1 extracts only the voice signal based on the utterance voice of the user US after the separation and transmits the extracted voice signal to the authentication analysis device P1.

The operator-side call terminal OP1 may be connected to each of a plurality of user-side call terminals so as to be able to communicate with each other, and may simultaneously acquire voice signals from the plurality of user-side call terminals. The operator-side call terminal OP1 transmits the acquired voice signals to the authentication analysis device P1. Accordingly, the voice authentication system 100 can execute a voice authentication process and a voice analysis process of each of a plurality of users at the same time.

In addition, the operator-side call terminal OP1 may acquire voice signals including utterance voices of the plurality of users at the same time. The operator-side call terminal OP1 extracts a voice signal for each user from the voice signals of the plurality of users acquired via the network NW and transmits the voice signal for each user to the authentication analysis device P1. In such a case, the operator-side call terminal OP1 may analyze the voice signals of the plurality of users and separate and extract the voice signal for each user based on the voice parameters such as the sound pressure level and the frequency band. When the voice signal is collected from an array microphone or the like, the operator-side call terminal OP1 may separate and extract the voice signal for each user based on an arrival direction of the utterance voice. Accordingly, the voice authentication system 100 can execute the voice authentication process and the voice analysis process for each of the plurality of users, even if the voice signals are collected in an environment in which the plurality of users speak at the same time, such as a Web conference.

The authentication analysis device P1 as an example of an authentification device and a computer is connected to the operator-side call terminal OP1, the registered speaker database DB, and the information display terminal DP so as to be able to transmit and receive data. The authentication analysis device P1 may be connected to the operator-side call terminal OP1, the registered speaker database DB, and the information display terminal DP via a network (not shown) so as to be able to perform wired communication or wireless communication.

The authentication analysis device P 1 acquires the voice signal of the user US transmitted from the operator-side call terminal OP1, and performs voice analysis on the acquired voice signal for each frequency, for example, to extract an utterance feature value of the individual user US. The authentication analysis device P1 executes voice authentication of the user US by referring to the registered speaker database DB and collating an utterance feature value of each of the plurality of users registered in the registered speaker database DB in advance with the extracted utterance feature value. The authentication analysis device P1 may execute voice authentication of the user US by collating the utterance feature value of a specific user registered in the registered speaker database DB in advance with the extracted utterance feature value, instead of the utterance feature value of each of the plurality of users registered in the registered speaker database DB in advance. The authentication analysis device P1 generates an authentication result screen SC including a user authentication result, and transmits and outputs the authentication result screen SC to the information display terminal DP. It is needless to say that the authentication result screen SC shown in FIG. 1 is an example and is not limited thereto. The authentication result screen SC shown in FIG. 1 includes a message that "The voice matches the voice of Taro Yamada.", which is the user authentication result. In addition, the authentication analysis device P1 may execute the voice authentication of the user US by collating the voice signal of each of the plurality of users registered in the registered speaker database DB in advance with the voice signal of the user US. The authentication analysis device P1 may execute voice authentication of the user US by collating a voice signal of a specific user registered in the registered speaker database DB in advance with the voice signal of the user US, instead of the voice signal of each of the plurality of users registered in the registered speaker database DB in advance.

The registered speaker database DB as an example of a database is a so-called storage, and is implemented using a storage medium such as a flash memory, a hard disk drive (HDD), or a solid state drive (SSD). The registered speaker database DB stores (registers) user information and the utterance feature values of the plurality of users in association with each other. Here, the user information is information related to the user, and is, for example, a username, a user identification (ID), and identification information assigned to each user. The registered speaker database DB may be integrated with the authentication analysis device P1.

The information display terminal DP is implemented using, for example, a liquid crystal display (LCD) or an organic electroluminescence (EL) display. The information display terminal DP displays the authentication result screen SC transmitted from the authentication analysis device P1. The information display terminal DP may be integrated with the authentication analysis device P1.

In the example shown in FIG. 1, the user-side call terminal UP1 collects an utterance voice COM12 "Taro Yamada" and an utterance voice COM14 "123245678" of the user US, converts the collected utterance voices into voice signals, and transmits the voice signals to the operator-side call terminal OP1. The operator-side call terminal OP1 transmits the voice signals based on the utterance voices COM12 and COM14 of the user US transmitted from the user-side call terminal UP1 to the authentication analysis device P1.

When the operator-side call terminal OP1 acquires voice signals obtained by collecting an utterance voice COM11 of the operator OP "please tell me your name", and an utterance voice COM13 "please tell me your membership number", and the utterance voices COM12 and COM14 of the user US, the operator-side call terminal OP1 separates and removes the voice signals based on the utterance voices COM11 and COM13 of the operator OP, extracts only the voice signals based on the utterance voices COM12 and COM14 of the user US, and transmits the voice signals to the authentication analysis device P1. Accordingly, the authentication analysis device P1 can improve user authentication accuracy by using only a voice signal of a person who is a voice authentication target.

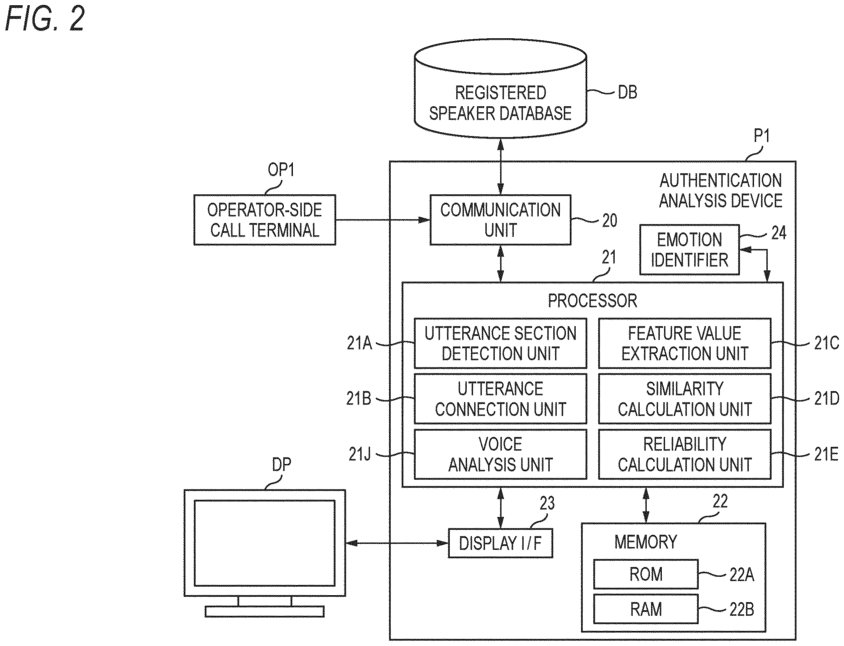

Next, an internal configuration example of the authentication analysis device will be described with reference to FIG. 2. FIG. 2 is a block diagram showing the internal configuration example of the authentication analysis device according to Embodiment 1. The authentication analysis device P1 includes a communication unit 20, a processor 21, and a memory 22.

The communication unit 20 is connected to the operator-side call terminal OP1 and the registered speaker database DB so as to be able to communicate data with each other. The communication unit 20 outputs the voice signals transmitted from the operator-side call terminal OP1 to the processor 21. The acquisition unit is not limited to the communication unit 20, and may be, for example, a microphone of the operator-side call terminal OP1 integrated with the authentication analysis device P1.

The processor 21 is implemented by a semi-conductor chip on which at least one of electronic devices such as a central processing unit (CPU), a digital signal processor (DSP), a graphical processing unit (GPU), and a field programmable gate array (FPGA) is mounted. The processor 21 functions as a controller that controls an overall operation of the authentication analysis device P 1, and executes a control process for controlling an operation of each part of the authentication analysis device P1, a data input and output process between each part of the authentication analysis device P1, a data calculation process, and a data storage process.

The processor 21 uses programs and data stored in the read only memory (ROM) 22A of the memory 22 to implement functions of an utterance section detection unit 21A, an utterance connection unit 21B, a feature value extraction unit 21C, a similarity calculation unit 21D, a reliability calculation unit 21E, and a voice analysis unit 21J. The processor 21 uses a random access memory (RAM) 22B of the memory 22 during the operation, and temporarily stores data or information generated or acquired by the processor 21 and each part in the RAM 22B of the memory 22.

The utterance section detection unit 21A as an example of an acquisition unit acquires a voice signal of an utterance voice, analyzes the acquired voice signal, and detects an utterance section uttered by the user US. The utterance section detection unit 21A outputs a voice signal (hereinafter referred to as an "utterance voice signal") corresponding to each utterance section detected based on the voice signal to the utterance connection unit 21B or the feature value extraction unit 21C. The utterance section detection unit 21A may temporarily store the utterance voice signal of each utterance section in the RAM 22B of the memory 22.

When two or more utterance sections of the same person (user US) are detected based on the voice signal by the utterance section detection unit 21A, the utterance connection unit 21B as an example of an authentication unit connects the utterance voice signals of the utterance sections. The utterance connection unit 21B may calculate the total number of seconds of connected voice signals. The utterance connection unit 21B outputs an utterance voice signal after the connection (hereinafter referred to as "a connected voice signal") to the feature value extraction unit 21C. A user authentification method will be described later.

The feature value extraction unit 21C as an example of an authentication unit extracts an utterance feature value by analyzing a feature of an individual voice extracted by the utterance section detection unit 21A using one or more utterance voice signals, for example, for each frequency. The feature value extraction unit 21C may extract an utterance feature value of the connected voice signal output from the utterance connection unit 21B. The feature value extraction unit 21C outputs, to the similarity calculation unit 21D in association with each other, the extracted utterance feature value and the utterance voice signals or the connected voice signal from which the utterance feature value is extracted, or temporarily stores the utterance feature value and the utterance voice signals or the connected voice signal in the RAM 22B of the memory 22.

The similarity calculation unit 21D as an example of an authentication unit acquires the utterance feature value of the utterance voice signals or the connected voice signal output from the feature value extraction unit 21C. The similarity calculation unit 21D refers to the registered speaker database DB to calculate a similarity between the utterance feature value of each of the plurality of users registered in the registered speaker database DB and the acquired utterance feature value after the connection. The similarity calculation unit 21D specifies a user corresponding to the utterance voice signals or the connected voice signal (that is, the voice signals transmitted from the user-side call terminal UP1) based on the calculated similarity, and executes user authentication.

When it is determined that the user is specified as a result of the user authentication, the similarity calculation unit 21D generates the authentication result screen SC including information related to the specified user (that is, an authentication result), and outputs the authentication result screen SC to the information display terminal DP via a display interface (I/F) 23.

When it is determined that the calculated similarity is smaller than a predetermined value, the similarity calculation unit 21D may determine that the user authentication is impossible, and may generate and output a control command for requesting the utterance connection unit 21B to connect utterance voice signals. In addition, when an upper limit number of times is set to the number of times of user authentication in the user authentication for the same person (the user US) and it is determined that the number of times the user authentication is determined to be impossible is equal to or larger than the upper limit number of times, the similarity calculation unit 21D may generate an authentication result screen (not shown) notifying that the user authentication is impossible and output the authentication result screen to the information display terminal DP.

The voice analysis unit 21J as an example of an authentication unit acquires one or more utterance voice signals or the connected voice signals extracted by the utterance section detection unit 21A. The voice analysis unit 21J analyzes a voice (hereinafter referred to as an "utterance voice") of the acquired utterance voice signal or the connected voice signal. For example, in a case where the utterance voice signal is " 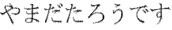 ", the corresponding voice is "ya ma da ta ro u de su". The voice analysis unit 21J may calculate the number of analyzed utterance voices, generate a calculation result screen (not shown), and output the calculation result screen to the information display terminal DP. In Embodiment 1, the number of types of utterance voices is defined as one phoneme by combining one consonant and one vowel, such as "ya".

The reliability calculation unit 21E as an example of an authentication unit acquires a connected voice signal connected by the utterance connection unit 21B. The reliability calculation unit 21E analyzes the reliability of the acquired connected voice signal. The reliability calculation unit 21E may acquire the utterance voice signal extracted by the utterance section detection unit 21A and analyze the reliability. The reliability is, for example, the reliability of the total number of seconds calculated by the utterance connection unit 21B and the reliability of the number of types of utterance voice calculated by the voice analysis unit 21J. The reliability calculation unit 21E may calculate the reliability based on a predetermined determination reference by the user.

Accordingly, the processor 21 authenticates whether the speaker is the person himself/herself based on collation between the utterance voice signal detected by the utterance section detection unit 21A and the registered speaker database DB in which the voice signals of the plurality of speakers are registered. In addition, the processor 21 calculates a total time of the utterance voice signals and the number of types of utterance voices included in the utterance voice signals, and determines a first reliability based on the total time and a second reliability based on the number of types of utterance voices based on calculation results of the total time and the number of types of utterance voices and a predetermined determination reference.

The memory 22 includes, for example, at least the ROM 22A that stores programs defining various processes executed by the processor 21 and data to be used during the execution of the programs, and the RAM 22B as a work memory to be used when the processor 21 executes various processes. The programs defining various processes executed by the processor 21 and the data to be used during the execution of the programs are written in the ROM 22A. The RAM 22B temporarily stores data or information (for example, an utterance voice signal before the connection, a connected voice signal after the connection, and an utterance feature value corresponding to each utterance section before or after the connection) generated or acquired by the processor 21.

The display I/F 23 connects the processor 21 and the information display terminal DP so as to be able to communicate data with each other, and outputs the authentication result screen SC generated by the similarity calculation unit 21D of the processor 21 to the information display terminal DP. The display I/F 23 displays, on the information display terminal DP, an authentication status indicating whether the speaker is the person himself/herself based on the authentication result of the processor 21.

The emotion identifier 24 is connected to the processor 21 so as to be able to communicate data with each other, and can be realized using, for example, artificial intelligence (AI). The emotion identifier 24 is implemented using, for example, a processor such as a graphical processing unit (GPU) capable of executing various processes using artificial intelligence. The emotion identifier 24 detects the intensity of an emotion of the speaker during a conversation based on the utterance voice signal detected by the utterance section detection unit 21A. The emotion identifier 24 may acquire the connected voice signal connected by the utterance connection unit 21B, detect the intensity of the emotion of the speaker during the conversation, or may detect the intensity of an emotion of the speaker during the conversation using the feature of the voice signal extracted by the feature value extraction unit 21C. The emotion identifier 24 analyzes, for example, a magnitude, a height (a frequency), and accent of the voice signal to detect the intensity of the emotion, but is not limited thereto.

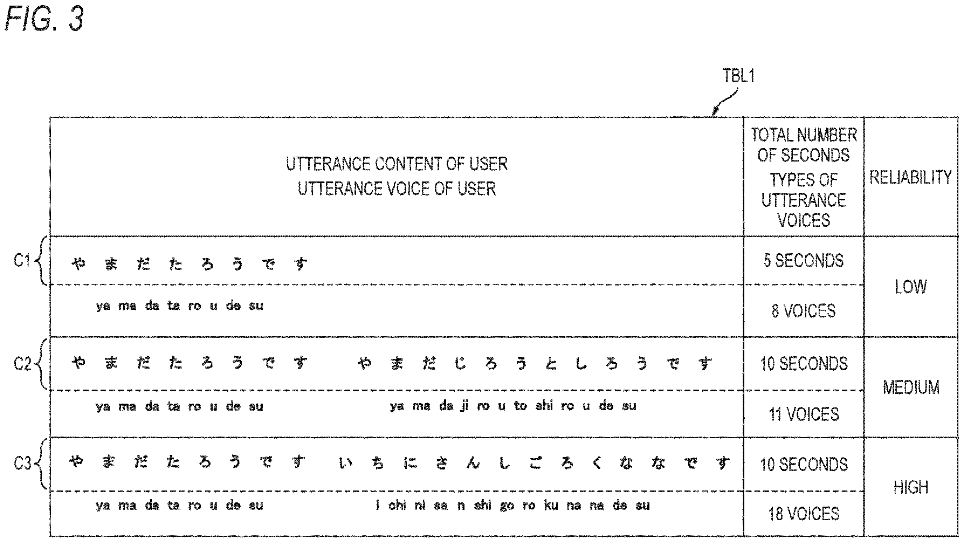

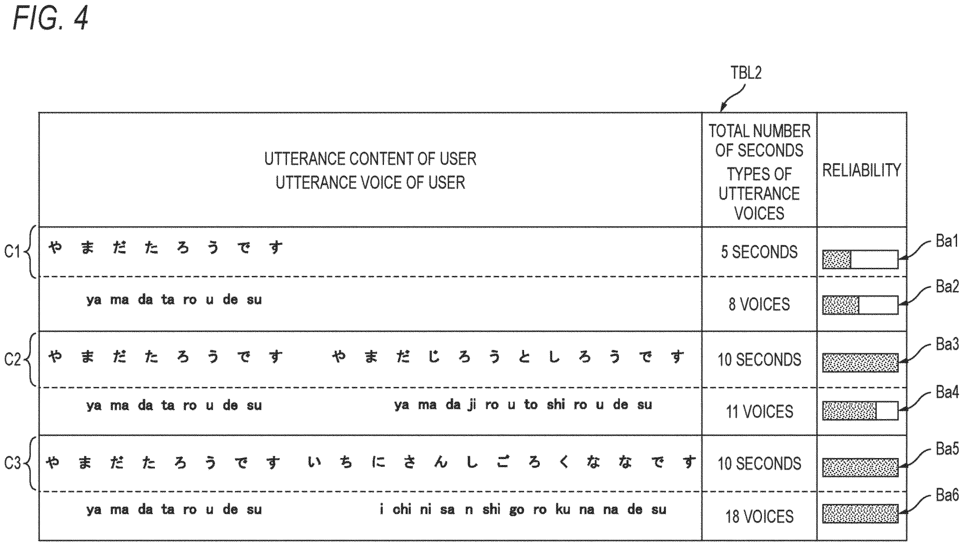

Next, a first relation between the voice signal and the reliability will be described with reference to FIG. 3. FIG. 3 is a diagram showing the first relation between the voice signal and the reliability according to Embodiment 1. It is needless to say that an utterance content of the user shown in FIGS. 3 and 4 is merely an example and is not limited thereto.

A first reliability determination table TBL1 shown in FIG. 3 is temporarily stored in the memory 22, for example, and represents a relation between an utterance voice, the total number of seconds, the number of types of utterance voices, and the reliability for the utterance content of the user. The elements of the reliability for the utterance content of the user are not limited to the total number of seconds and the number of types of utterance voices, and the number of elements of the reliability is not limited to two.

In the example shown in FIG. 3, among the reliability of the total number of seconds and the reliability of the number of types of utterance voices, the higher reliability is finally determined as the reliability for the utterance content of the user. That is, the reliability calculation unit 21E determines the higher one of the first reliability based on the total time and the second reliability based on the number of types of utterance voices as the reliability corresponding to the utterance voice signal. For example, determination references of the reliability of the total number of seconds are "low" for less than 10 seconds, "middle" for 10 seconds or more and less than 15 seconds, and "high" for 15 seconds or more. Determination references of the reliability of the number of types of utterance voices are "low" for less than 10 voices, "middle" for 10 or more voices and less than 15 voices, and "high" for 15 or more voices. It is needless to say that the determination references of the reliability are merely examples and are not limited thereto. The reliability may be expressed by characters such as "low", "medium", and "high", percentage, gauge, or bar graph.

An utterance voice of the first utterance content C1 " 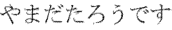 " is "ya ma da ta ro u de su". The total number of seconds of the first utterance content C1 is 5 seconds, and the number of types of utterance voices is 8 phonemes. In this case, the reliability of the total number of seconds is "low", and the reliability of the number of types of utterance voices is "low". As a result, both the reliability of the total number of seconds and the reliability of the number of types of utterance voices are "low", and thus the reliability of the first utterance content C1 is "low".

### An utterance voice of the second utterance content C2

" 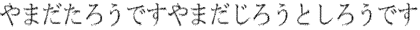 " is "ya ma da ta ro u de su ya ma da ji ro u to shi ro u de su". The total number of seconds of the second utterance content C2 is 10 seconds, and the number of types of utterance voices is 11 phonemes. In this case, the reliability of the total number of seconds is "medium", and the reliability of the number of types of utterance voices is "medium". As a result, both the reliability of the total number of seconds and the reliability of the number of types of utterance voices are "medium", and thus the reliability of the second utterance content C2 is "medium".

### An utterance voice of the third utterance content C3

" 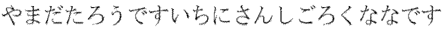 " is "ya ma da ta ro u de su i chi ni sa n shi go ro ku na na de su". The total number of seconds of the third utterance content C3 is 10 seconds, and the number of types of utterance voices is 18 phonemes. In this case, the reliability of the total number of seconds is "medium", and the reliability of the number of types of utterance voices is "high". In the example shown in FIG. 3, the higher one of the reliability of the total number of seconds and the reliability of the number of types of utterance voices is determined as the reliability corresponding to the utterance content of the user. Therefore, the reliability "high" of the number of types of utterance voices having higher reliability is determined as the reliability of the third utterance content C3.

Accordingly, when one of the reliability of the total number of seconds or the number of types of utterance voices reaches a threshold value of the reliability, it is determined that the reliability for the utterance content of the user is equal to or larger than the threshold value. Therefore, it is possible to shorten the time until the authentication of the identity confirmation of the speaker is completed.

Next, a second relation between the voice signal and the reliability will be described with reference to FIG. 4. FIG. 4 is a diagram showing the second relation between the voice signal and the reliability according to Embodiment 1.

A second reliability determination table TBL2 shown in FIG. 4 is temporarily stored in the memory 22, for example, and represents a relation between an utterance voice, the total number of seconds, the number of types of utterance voices, and the reliability for the utterance content of the user. The elements of the reliability for the utterance content of the user are not limited to the total number of seconds and the number of types of utterance voices, and the number of elements of the reliability is not limited to two.

In the example shown in FIG. 4, among the reliability of the total number of seconds and the reliability of the number of types of utterance voices, the lower reliability is finally determined as the reliability for the utterance content of the user. That is, the reliability calculation unit 21E determines the lower one of the first reliability based on the total time and the second reliability based on the number of types of utterance voices as the reliability corresponding to the utterance voice signal. For example, determination references of the reliability of the total number of seconds are "low" for less than eight seconds, "middle" for eight seconds or more and less than 10 seconds, and "high" for 10 seconds or more. Determination references of the reliability of the number of types of utterance voices are "low" for less than 9 voices, "middle" for 10 or more voices and less than 15 voices, and "high" for 15 or more voices. It is needless to say that the determination references of the reliability are merely examples and are not limited thereto. In the example shown in FIG. 4, since only the final determination method of the reliability is different from that in the example shown in FIG. 3, the description of the parts overlapping with the example shown in FIG. 3 will be omitted.

In the example shown in FIG. 4, a bar graph is used to express the reliability. A reliability Ba1 of first total number of seconds will be described as an example. The reliability Ba1 is a long rectangular bar graph that is long in a left-right direction, and a meter continuously increases from left to right when the reliability increases with respect to a predetermined reference value. When the reliability is "high" with respect to the predetermined reference value, the meter reaches a right end. This is merely an example, and a vertically long rectangular bar graph may be used to express the reliability. Accordingly, the reliability can be treated as a continuous parameter.

The total number of seconds of the first utterance content C1 is 5 seconds, and the number of types of utterance voices is 8 phonemes. In this case, the reliability of the total number of seconds is "low", and the reliability of the number of types of utterance voices is "low". According to the reliability Ba1 and the reliability Ba2, the lower reliability is the reliability of the total number of seconds. Therefore, the reliability of the first utterance content C1 is "low" of the reliability Ba1.

The total number of seconds of the second utterance content C2 is 10 seconds, and the number of types of utterance voices is 11 phonemes. In this case, the reliability of the total number of seconds is "high", and the reliability of the number of types of utterance voices is "medium". When the reliability of the total number of seconds is "high", a reliability Ba3 reaches the right end of the meter. Since the number of types of utterance voices of the second utterance content C2 is larger than the number of types of utterance voices of the first utterance content C1 by three, the meter increases in a reliability Ba4 as compared with the reliability Ba2. Referring to the reliability Ba3 and the reliability Ba4, the reliability Ba4 is found to be lower in reliability, and the reliability of the second utterance content C2 is set to "medium" of the reliability Ba4.

The total number of seconds of the third utterance content C3 is 10 seconds, and the number of types of utterance voices is 18 phonemes. In this case, the reliability of the total number of seconds is "high", and the reliability of the number of types of utterance voices is "high". When the reliability of the total number of seconds is "high", a reliability Ba5 reaches the right end of the meter. When the reliability of the number of types of utterance voices is "high", a reliability Ba6 reaches the right end of the meter. According to the reliability Ba5 and the reliability Ba6, the reliability of the third utterance content C3 is "high" of the reliability Ba5 or the reliability Ba6.

Accordingly, when the lower reliability reaches the threshold value of the reliability, the reliability for the utterance content of the user is determined to be equal to or larger than the threshold value. Therefore, it is possible to increase the reliability of the authentication of the identity confirmation of the speaker.

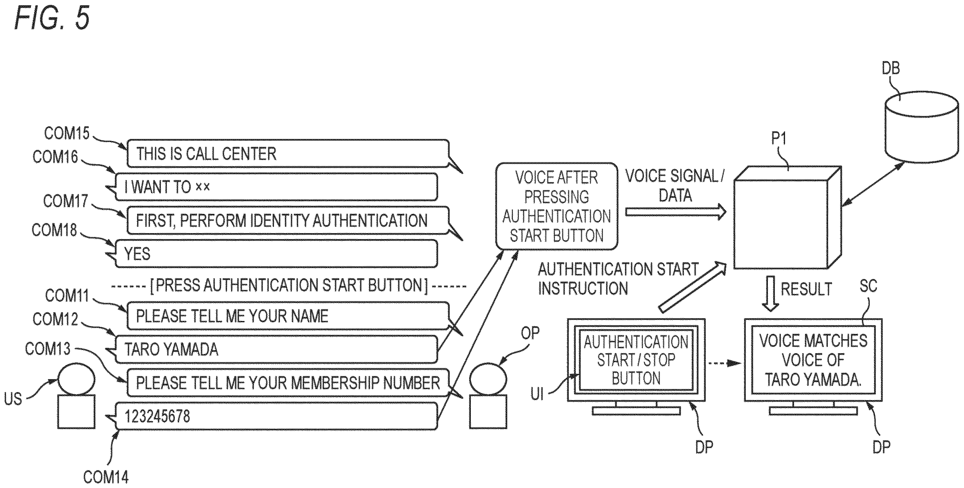

Next, an authentication start timing will be described with reference to FIG. 5. FIG. 5 is a diagram showing an example in which authentication is started after an authentication start button is pressed according to Embodiment 1.

In the example shown in FIG. 5, first, the user US and the operator OP have a conversation including utterance contents such as an utterance voice COM15 of the operator OP "This is oo call center", an utterance voice COM16 of the user US "I want to ××", an utterance voice COM17 of the operator "First, perform user authentication", and an utterance voice COM18 of the user US "Yes". Thereafter, the operator OP presses an authentication start button UI displayed on the information display terminal DP, and the authentication analysis device P1 starts collecting voices from utterance voice signals after the authentication start button UI is pressed. Thereafter, the user US and the operator OP have a conversation including utterance contents such as the utterance voice COM11 of the operator OP "Please tell me your name", the utterance voice COM12 of the user US "Taro Yamada", the utterance voice COM13 of the operator OP "Please tell me your membership number", and the utterance voice COM14 of the user US "12345678". In this case, after the operator OP presses the authentication start button UI displayed on the information display terminal DP, voice signals based on the utterance voice COM12 and COM14 of the user US are transmitted to the authentication analysis device P1. That is, when a signal indicating that the authentication start button UI displayed on the information display terminal DP is pressed is acquired, the processor 21 starts authentication from the utterance voice signal input after acquisition of the signal.

The authentication analysis device P1 performs authentication based on the acquired utterance voice signals, and displays an authentication result on the authentication result screen SC on the information display terminal DP. In the example shown in FIG. 5, when the authentication of the identity confirmation is completed, "The voice matches a voice of Taro Yamada." is displayed on the authentication result screen SC.

The authentication analysis device P1 can intentionally exclude an unnecessary utterance voice signal of the user US from the authentication of the identity confirmation based on an operation of the operator OP. Accordingly, the authentication analysis device P1 can use only the necessary utterance voice signal of the user US to authenticate the identity confirmation, thus improving the authentication accuracy.

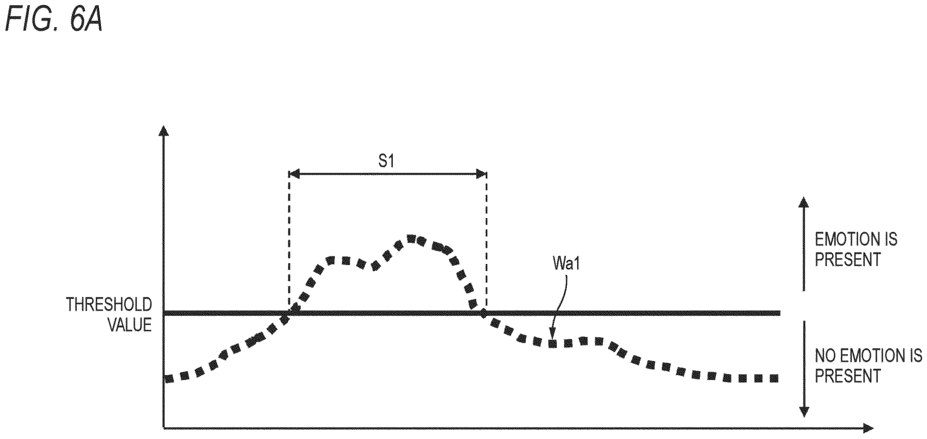

Next, an emotion of a connected voice signal will be described with reference to FIG. 6A. FIG. 6A is a diagram showing the presence or absence of an emotion of a voice signal according to Embodiment 1. The voice signal according to FIG. 6A may be an utterance voice signal.

In the graph shown in FIG. 6A, a horizontal axis represents time and a vertical axis represents the intensity of the emotion. In the horizontal axis, the time advances toward the right, and in the vertical axis, the intensity of the emotion increases toward the top.

An emotion waveform Wa1 is a waveform that represents the intensity of the emotion identified by the emotion identifier 24. The processor 21 determines that an emotion is present when the emotion waveform Wa1 is equal to or larger than a predetermined threshold value and determines that no emotion is present when the emotion waveform Wa1 is less than the threshold value. That is, in the example shown in FIG. 6A, an emotion is present in a section S 1 of the emotion waveform Wa1, and no emotion is present in sections other than the section S 1.

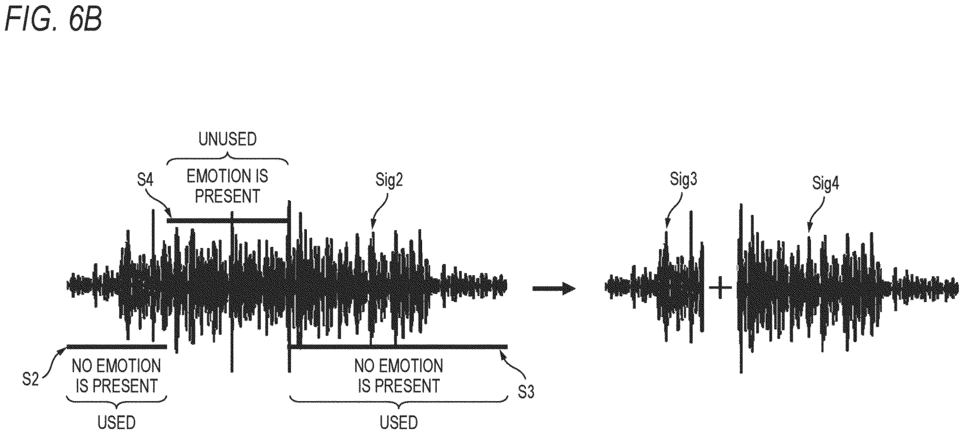

Next, processing of a voice signal according to the presence or absence of an emotion will be described with reference to FIG. 6B. FIG. 6B is a diagram showing the processing of a voice signal according to the presence or absence of an emotion according to Embodiment 1. The voice signal according to FIG. 6B may be an utterance voice signal or a connected voice signal.

Voice signal waveforms Sig2, Sig3, and Sig4 are connected voice signals and are waveforms indicating the intensity of the voice signal.

Based on the intensity of an emotion of the voice signal waveform Sig2 detected by the emotion identifier 24, the processor 21 determines the presence or absence of an emotion. As a result, it is determined that no emotion is present in sections S2 and S3 of the voice signal waveform Sig2, and an emotion is present in a section S4. The processor 21 uses, for authentication, only the sections S2 and S3 in which it is determined that no emotion is present in the voice signal waveform Sig2, and does not use, for authentication, the section S4 in which it is determined that an emotion is present. The authentication analysis device P1 deletes voice signals in the section S4, and connects the voice signal waveform Sig3 in the section S2 and the voice signal waveform Sig4 in the section S3 to generate one connected voice signal. That is, the processor 21 determines whether a detection result of the intensity of the emotion is equal to or larger than the predetermined threshold value, and deletes voice signals in a voice section in which the intensity of the emotion is equal to or larger than the predetermined threshold value.

Accordingly, the authentication analysis device P1 can delete a voice signal section that is not suitable for the authentication of the identity confirmation according to the intensity of the emotion and improve the authentication accuracy.

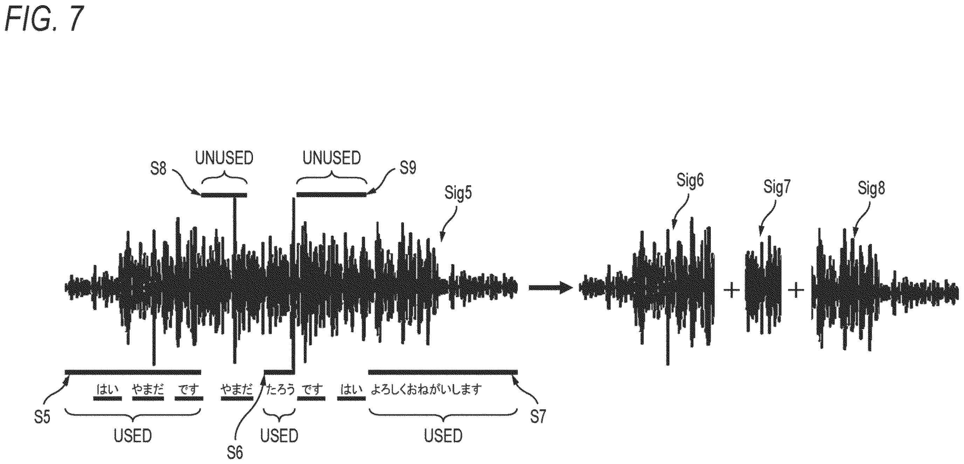

Next, a process of deleting repetition sections of the voice signal will be described with reference to FIG. 7. FIG. 7 is a diagram showing the process of deleting repetition sections of the voice signal according to Embodiment 1.

A voice signal waveform Sig5 is a connected voice signal "hai yamada desu yamada tarou desu hai yorosikuonegaisimasu". When the processor 21 analyzes the voice signal waveform Sig5, "yamada", "desu", and "hai" appear repeatedly in the voice signal waveform Sig5. The processor 21 determines that the section S5 "hai yamada desu", the section S6 "tarou", and the section S7 "yorosikuonegaisimasu" are used for authentication. On the other hand, the processor 21 determines that the section S8 "yamada" and the section S9 "desu hai" as the overlapping contents are not used for authentication. The processor 21 deletes the sections S8 and S9, and connects the voice signal waveform Sig6 in the section S5, the voice signal waveform Sig7 in the section S6, and the voice signal waveform Sig8 in the section S7 to generate one connected voice signal. That is, the processor 21 performs voice recognition on the voice signal, detects voice sections in which the utterance contents overlap with each other in a voice recognition result of the voice signals, and deletes voice signals in the detected overlapped voice sections.

Accordingly, the authentication analysis device P1 can delete, from the voice signals, voice signals in the sections in which the utterance contents overlap, and can improve the authentication accuracy.

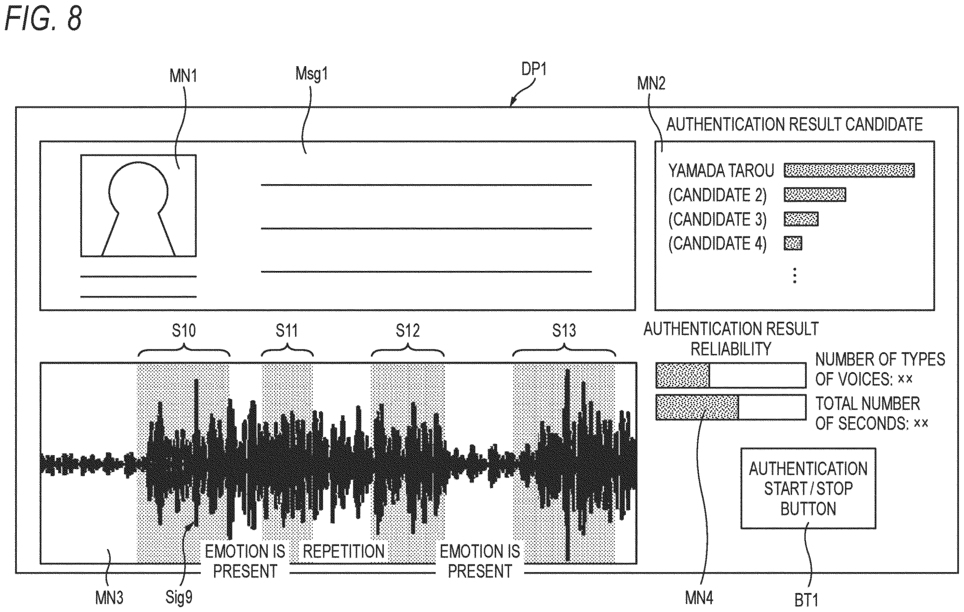

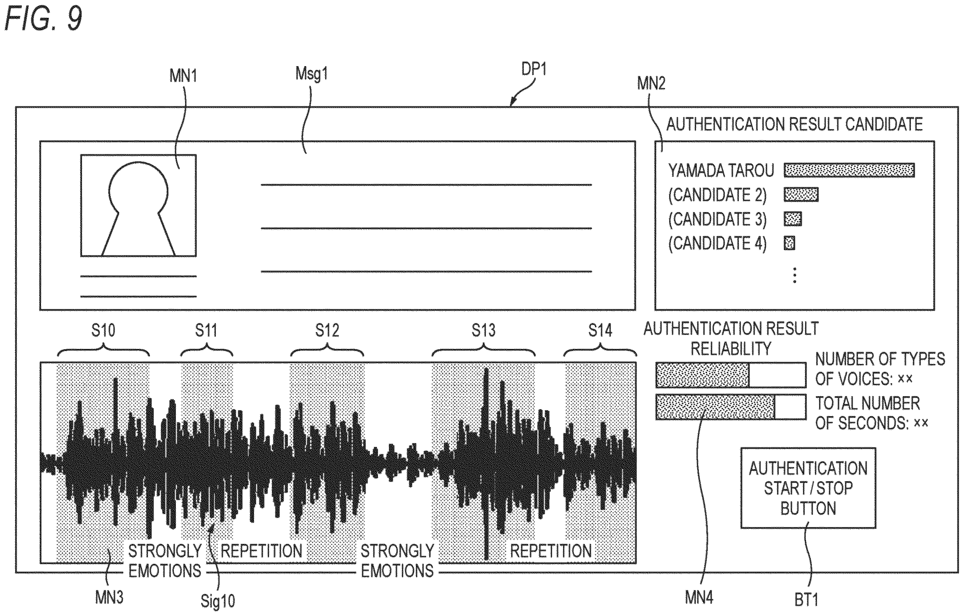

Next, screen examples representing authentication statuses will be described with reference to FIGS. 8 and 9. FIG. 8 is a diagram showing a first screen example representing an authentication status according to Embodiment 1, and FIG. 9 is a diagram showing a second screen example showing an authentication status according to Embodiment 1. The screen examples are merely examples and are not limited thereto.

A display DP1 is a screen example displayed on the information display terminal DP by the display I/F 23. The content displayed on the display DP1 has at least an authentication result candidate of the speaker and an authentication result reliability of the authentication of the identity confirmation.

In the authentication of identity confirmation, a message Msg1 displays information of a person who is now closest to the user US among user information stored in the registered speaker database DB. For example, the contents displayed in the message Msg1 is a portrait picture, a name, a sex, an address, and a telephone number in a candidate information column MN1. The contents displayed in the message Msg1 are merely examples and are not limited thereto.

In an authentication result candidate column MN2, candidates of an authentication result of the identity confirmation are displayed. In the authentication result candidate column MN2, a name of a candidate and a probability of the user US for each candidate may be displayed side by side together. The probability of the user US may be a bar meter indicated in the authentication result candidate column MN2 in FIG. 8, or may be a percentage. Candidates having the highest probability of being the user US may be displayed in order from the top, or in kana character order or alphabetical order, and the order may be freely set by the operator OP.

A voice signal display column MN3 displays a waveform of a connected voice signal. A voice signal waveform Sig9 is a connected utterance voice signal and is a waveform representing the intensity of the voice signal. The voice signal display column MN3 displays a section used for authentication of the voice signal waveform Sig9 and a section not used for authentication so as to be understood. For example, in the example shown in FIG. 8, a color of the background of each of the sections S10, S11, S12, and S13 used for authentication of the voice signal waveform Sig9 is changed and displayed. Accordingly, the sections with emotion and the repetition sections of the utterance content can be visualized in the voice signal waveform Sig9. That is, the display I/F 23 displays, on the information display terminal DP, a determination result of the presence or absence of an emotion by the processor 21. The operator OP may select an unnecessary voice section based on the determination result displayed by the display I/F 23 and delete voice signals in the selected voice section.

An authentication result reliability meter MN4 displays the reliability of each of the number of utterance phonemes and the total number of seconds of the voice signal waveform Sig9 via the meter.

A button BT1 is an authentication start/stop button. Accordingly, the operator OP can start authentication from an utterance voice signal after pressing the button BT1.

FIG. 9 shows a screen example in a case where authentication proceeds more than an authentication status shown in FIG. 8.

In the authentication result candidate column MN2, the authentication of the identity confirmation proceeds, and a probability that a candidate of the real time is the user US of each candidate is displayed. In the authentication result candidate column MN2 shown in FIG. 9, the probability that the user US is "yamada tarou" is increased compared to the authentication result candidate column MN2 shown in FIG. 8. Accordingly, the operator OP can know the real-time candidates of the authentication result of the identity confirmation.

The voice signal waveform Sig10 displayed in the voice signal display column MN3 is a connected voice signal in a case where a conversation between the operator OP and the user US proceeds more than the voice signal waveform Sig9. With respect to the voice signal waveform Sig9, in the voice signal waveform Sig10, voice signals in the section S 14 are added as voices to be used for authentication.

The authentication result reliability meter MN4 displays the reliability of each of the number of types of utterance voices and the total number of seconds of the voice signal waveform Sig10 via the meter. In the voice signal waveform Sig10, the voice signals in the section S14 are added as the voices to be used for authentication with respect to the voice signal waveform Sig9. Therefore, the reliability of the number of types of utterance voices and the total number of seconds increases compared to the example shown in FIG. 8. Accordingly, the operator OP can know the number of types of real-time utterance phonemes and the reliability of the total number of seconds in the authentication of the identity confirmation.

As in the examples of FIGS. 8 and 9, the display I/F 23 updates the display content of the authentication status each time the authentication status of the speaker by the processor 21 changes.

Accordingly, the authentication analysis device P1 displays the authentication result of the identity confirmation of the processor 21 on the information display terminal DP in real time. Accordingly, the operator OP can confirm the authentication status of the identity confirmation in real time, and work efficiency of the operator OP can be improved.

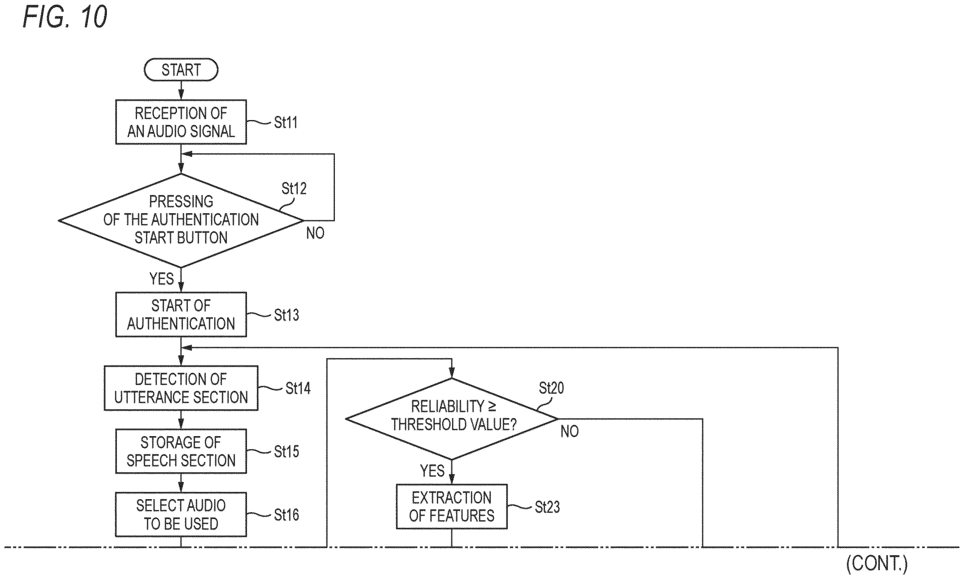

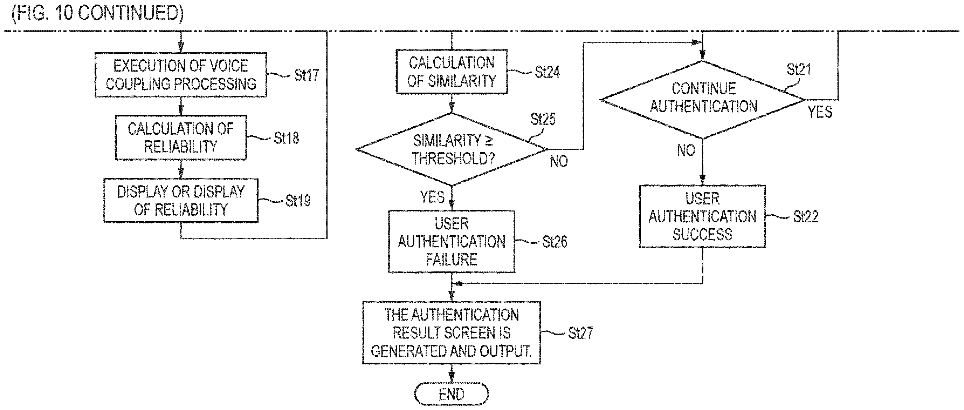

Next, an operation procedure example of the authentication analysis device will be described with reference to FIG. 10. FIG. 10 is a flowchart showing the operation procedure example of the authentication analysis device according to Embodiment 1.

The communication unit 20 in the authentication analysis device P1 acquires a voice signal (or voice data) transmitted from the operator-side call terminal OP1 (St11).

The display I/F 23 in the authentication analysis device P1 acquires a signal indicating whether the authentication start button displayed on the information display terminal DP is pressed (St12). When the display I/F 23 does not acquire a signal indicating that the authentication start button is pressed (St12, NO), the display I/F 23 returns to the process of step St11. When the display I/F 23 acquires a signal indicating that the authentication start button is pressed (St12, YES), the display I/F 23 outputs the voice signal acquired by the communication unit 20 to the processor 21 in the process of step St11.

The processor 21 starts the authentication of the user US, which is a voice authentication target of the acquired voice signal, at a timing at which the display I/F 23 acquires the signal indicating that the authentication start button is pressed in the process of step St12 (St13).

The utterance section detection unit 21A in the processor 21 detects an utterance section from the acquired voice signal (St14).

The utterance section detection unit 21A stores, in the memory 22, information on the detected utterance section (for example, a start time and an end time of the utterance section, the number of characters, the number of types of utterance voices, a signal length (an utterance voice length, the number of seconds of an utterance, and the like), and a speech speed before or after speech speed conversion) (St15).

The utterance section detection unit 21A selects one or more utterance voice signals to be used for the user authentication based on a currently set user authentication processing method (St16). Although not shown in FIG. 10, when it is determined that there is no utterance voice signal to be used for the user authentication based on the currently set user authentication processing method, the authentication analysis device P1 may return to the process of step St14 to detect a new utterance section. The utterance section detection unit 21A outputs the selected utterance voice signal to the utterance connection unit 21B.

The utterance connection unit 21B executes a voice connection process of connecting the selected one or more utterance voice signals to generate a connected voice signal (St17). The utterance connection unit 21B outputs the generated connected voice signal to the reliability calculation unit 21E.

The reliability calculation unit 21E calculates a reliability using the connected voice signal generated in the process of step St17 (St18). For example, the reliability calculated in the process of step St18 is a reliability of the total number of seconds of the connected voice signals and the number of types of utterance voices. The reliability calculated in the process of step St18 is not limited thereto.

The display I/F 23 displays the reliability calculated in the process of step St18 on the information display terminal DP or updates the display (St19).

The reliability calculation unit 21E determines whether the reliability calculated in the process of step St18 is equal to or larger than a predetermined threshold value (St20). In the process of step St20, when the reliability is less than the threshold value (St20, NO), the authentication analysis device P1 determines whether authentication of identity confirmation is continued (St21). For example, when the reliability calculation unit 21E determines that a current number of times of authentication is less than an upper limit value of a predetermined number of times of authentication as a determination as to whether to continue the authentication of the identity confirmation (St21, YES), the process by the processor 21 returns to the process of step St14. When the reliability calculation unit 21E determines that the current number of times of authentication is equal to or larger than the upper limit value of the predetermined number of times of authentication as a determination as to whether to continue the authentication of the identity confirmation (St21, NO), for example, the reliability calculation unit 21E determines that the user authentication has failed based on the acquired voice signal (St22). The display I/F 23 generates an authentication result screen notifying that the user authentication has failed, and outputs the authentication result screen to the information display terminal DP. The information display terminal DP outputs (displays) the authentication result screen transmitted from the authentication analysis device P1.

On the other hand, in the process of step St20, when the reliability is equal to or larger than the threshold value (St20, YES), the reliability calculation unit 21E outputs the connected voice signal to the feature value extraction unit 21C. The feature value extraction unit 21C extracts an utterance feature value of the individual user US from the connected voice signal output from the reliability calculation unit 21E (St23). The feature value extraction unit 21C outputs the extracted utterance feature value of the individual user US to the similarity calculation unit 21D.

The similarity calculation unit 21D refers to an utterance feature value of each of the plurality of users registered in the registered speaker database DB, and calculates a similarity between the utterance feature value of the individual user US output from the feature value extraction unit 21C and the utterance feature value of each of the plurality of users registered in the registered speaker database DB (St24).

The similarity calculation unit 21D determines whether there is a user whose calculated similarity is equal to or larger than a threshold value among the plurality of users registered in the registered speaker database DB (St25).

When it is determined in the process of step St25 that there is a user whose calculated similarity is equal to or larger than the threshold value among the plurality of users registered in the registered speaker database DB (St25, YES), the similarity calculation unit 21D determines that the user is the user US of the voice signal (St26). When it is determined that there are a plurality of users whose similarities are equal to or larger than the threshold value, the similarity calculation unit 21D may determine that a user having the highest similarity is the user US of the voice signal.

When it is determined that the user is specified, the similarity calculation unit 21D outputs information related to the specified user (that is, an authentication result) to the display I/F 23, the display I/F 23 generates the authentication result screen SC based on the information output by the similarity calculation unit 21D, and outputs the authentication result screen SC to the information display terminal DP (St27).

On the other hand, when it is determined in the process of step St25 that there is no user whose calculated similarity is equal to or larger than the threshold value among the plurality of users registered in the registered speaker database DB (St25, NO), the similarity calculation unit 21D determines whether the current number of times of user authentication processes is equal to or larger than a set upper limit number of times as a determination as to whether to continue the authentication of the identity confirmation (St21).

When it is determined in the process of step St21 that the current number of times of authentication is equal to or larger than the upper limit value of the predetermined number of times of authentication as a determination as to whether to continue the authentication of the identity confirmation (St21, NO), for example, the similarity calculation unit 21D determines that the user authentication has failed based on the acquired voice signal (St22). The display I/F 23 generates an authentication result screen notifying that the user authentication has failed, and outputs the authentication result screen to the information display terminal DP. The information display terminal DP outputs (displays) the authentication result screen transmitted from the authentication analysis device P1.

When it is determined that the current number of times of authentication is less than the upper limit value of the predetermined number of times of authentication (St21, YES), the similarity calculation unit 21D returns to the process of step St14.

As described above, the authentication analysis device P1 according to Embodiment 1 can execute a user authentication process using an utterance voice signal more suitable for the user authentication process using a predetermined user authentication processing method. Accordingly, the authentication analysis device P1 according to Embodiment 1 can improve the user authentication accuracy.

As described above, the authentication analysis device P1 according to Embodiment 1 includes the utterance section detection unit 21A that acquires and detects a voice signal of an utterance voice of a speaker, the processor 21 that authenticates whether the speaker is the person himself/herself based on collation between the voice signal and the registered speaker database DB, and the display I/F 23 that displays, on the information display terminal DP, an authentication status indicating whether the speaker is the person himself/herself based on an authentication result of the processor 21. The display I/F 23 updates a display content of the authentication status each time the authentication status of the speaker by the processor 21 changes.

Accordingly, the authentication analysis device P1 displays the authentication result of the identity confirmation of the processor 21 on the information display terminal DP in real time. Accordingly, the operator OP can confirm the authentication status of the identity confirmation in real time, and work efficiency of the operator OP can be improved.

Further, the processor 21 according to Embodiment 1 calculates a total time of the voice signal and the number of voices included in the voice signal, and determines a first reliability based on the total time and a second reliability based on the number of voices based on calculation results of the total time and the number of voices and a predetermined determination reference. Accordingly, since the reliability of the authentication result of the identity confirmation of the speaker is calculated and notified to the operator OP in real time, the operator OP can predict a timing of the completion of the authentication of the speaker, and the work efficiency of the operator OP can be improved.

The processor 21 according to Embodiment 1 determines the higher one of the first reliability and the second reliability as the reliability corresponding to the voice signal. Accordingly, when one of the first reliability and the second reliability satisfies a predetermined determination reference, the reliability determination can be completed, and thus the time until the authentication of the speaker is completed can be shortened.

The processor 21 according to Embodiment 1 determines the lower one of the first reliability and the second reliability as the reliability corresponding to the voice signal. Accordingly, since the reliability determination is completed when both the first reliability and the second reliability satisfy the predetermined determination reference, the authentication accuracy can be improved.

When a signal indicating that the authentication start button displayed on the information display terminal DP is pressed is acquired, the processor 21 according to Embodiment 1 starts authentication from the voice signal input after acquisition of the signal. Accordingly, since the start of the authentication of the identity confirmation of the speaker can be performed by an operation of the operator OP, it is possible to notify that the start of the authentication is performed before the operator OP starts the authentication to the user US. In addition, authentication may not be performed when authentication is not necessary in the determination of the operator OP.

The authentication analysis device P1 according to Embodiment 1 further includes the emotion identifier 24 that detects the intensity of an emotion of a speaker during the conversation based on a voice signal. The processor 21 determines whether a detection result of the intensity of the emotion is equal to or larger than a predetermined threshold value, and deletes voice signals in a voice section in which the intensity of the emotion is equal to or larger than the predetermined threshold value. Accordingly, the authentication analysis device P1 can improve the authentication accuracy by detecting and deleting a voice section that is not suitable for authentication of identity confirmation.

The authentication analysis device P1 according to Embodiment 1 further includes the emotion identifier 24 that detects the intensity of an emotion of a speaker during the conversation based on a voice signal, and the processor 21 determines whether a detection result of the intensity of the emotion is equal to or larger than a predetermined threshold value. The display I/F 23 displays a determination result on the information display terminal DP, and deletes voice signals in a voice section selected by a user operation on the determination result displayed based on the display I/F 23. Accordingly, the operator OP can freely delete a voice section that is not suitable for authentication of the detected identity confirmation, and authentication accuracy can be improved.

That is, the processor 21 according to Embodiment 1 performs voice recognition on the voice signal, detects voice sections in which the utterance contents overlap with each other in a voice recognition result of the voice signals, and deletes voice signals in the detected overlapped voice sections. Accordingly, the authentication analysis device P1 can efficiently perform the authentication of the identity confirmation by deleting the voice sections of the utterance contents that overlap in the utterance voice signal and the connected voice signal.

The display content of the authentication status according to Embodiment 1 has at least an authentication result candidate of the speaker and an authentication result reliability of the authentication. As a result, the operator OP can confirm the authentication status of the identity confirmation in real time, and work efficiency of the operator OP can be improved.

### (Background of Embodiment 2)

Patent Literature 1 discloses a work of simply displaying a predetermined confirmation item on an operator terminal in the identity confirmation work of a customer of an operator. In this identity confirmation work, the total time of the obtained voice signals is shortened, and phonemes of the obtained voice signals are biased. Therefore, there is a problem that the authentication accuracy of identity confirmation is poor.

Therefore, in the following Embodiment 2, an example of an authentification device and an authentification method capable of performing, by an operator, authentication of identity confirmation of a customer with high accuracy will be described. In the following description, the same components as those in Embodiment 1 are denoted by the same reference numerals, and thus the description thereof will be omitted.

### (Embodiment 2)

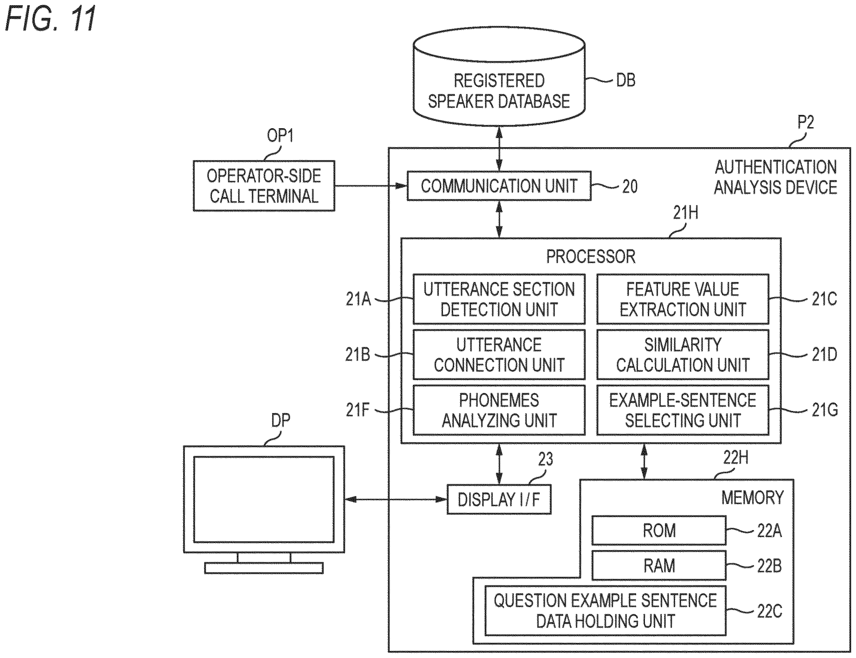

An example of an internal configuration of an authentication analysis device will be described with reference to FIG. 11. FIG. 11 is a block diagram showing the internal configuration example of the authentication analysis device according to Embodiment 2. An authentication analysis device P2 includes at least a communication unit 20, a processor 21H, and a memory 22H. In Embodiment 2, the memory 22H further includes a question example sentence data storage unit 22C as compared with Embodiment 1.

The processor 21H uses programs and data stored in the ROM 22A of the memory 22H to implement the functions of the utterance section detection unit 21A, the utterance connection unit 21B, the feature value extraction unit 21C, the similarity calculation unit 21D, a phoneme analysis unit 21F, and the example sentence selection unit 21G. The processor 21H uses the RAM 22B of the memory 22H during the operation to temporarily store data or information generated or acquired by the processor 21H and each unit in the RAM 22B of the memory 22H.

The example sentence selection unit 21G as an example of an authentication unit selects a question example sentence to be displayed on the information display terminal DP from a plurality of question example sentences stored in the question example sentence data storage unit 22C. The example sentence selection unit 21G selects an appropriate question example sentence and displays the question example sentence on the information display terminal DP in order to improve the authentication accuracy of the identity confirmation. The example sentence selection unit 21G may select a question example sentence immediately after the start of the authentication and display the question example sentence on the information display terminal DP. Alternatively, as the authentication progresses, the example sentence selection unit 21G may select a question example sentence at a timing at which the similarity calculation unit 21D determines that a similarity of an utterance voice signal or a connected voice signal is equal to or less than a threshold value, and display the selected question example on the information display terminal DP. Alternatively, as the authentication progresses, the example sentence selection unit 21G may select a question example sentence based on an analysis result of the phoneme analysis unit 21F and display the question example sentence on the information display terminal DP.

The question example sentence data storage unit 22C as an example of an authentication unit stores data of the question example sentence selected by the example sentence selection unit 21G and displayed on the information display terminal DP. The question example sentence data storage unit 22C stores, as question example sentences, a plurality of questions for acquiring a voice signal used for authentication of a speaker by the processor 21H. The question example sentence data storage unit 22C may be provided in the memory 22H or may be provided outside the authentication analysis device P2 and connected to the authentication analysis device P2 so as to be able to communicate data with each other.

The phoneme analysis unit 21F as an example of an authentication unit extracts phonemes included in a voice signal of the speaker detected by the utterance section detection unit 21A. Here, the definition of phonemes calculated by the phoneme analysis unit 21F according to Embodiment 2 will be described. For example, in a case where the utterance voice signal is " 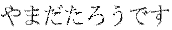 ", the corresponding voice is "ya ma da ta ro u de su". That is, in Embodiment 2, in the number of utterance phonemes, and a consonant and a vowel are defined as one phoneme as indicated by "y" and "a", respectively.

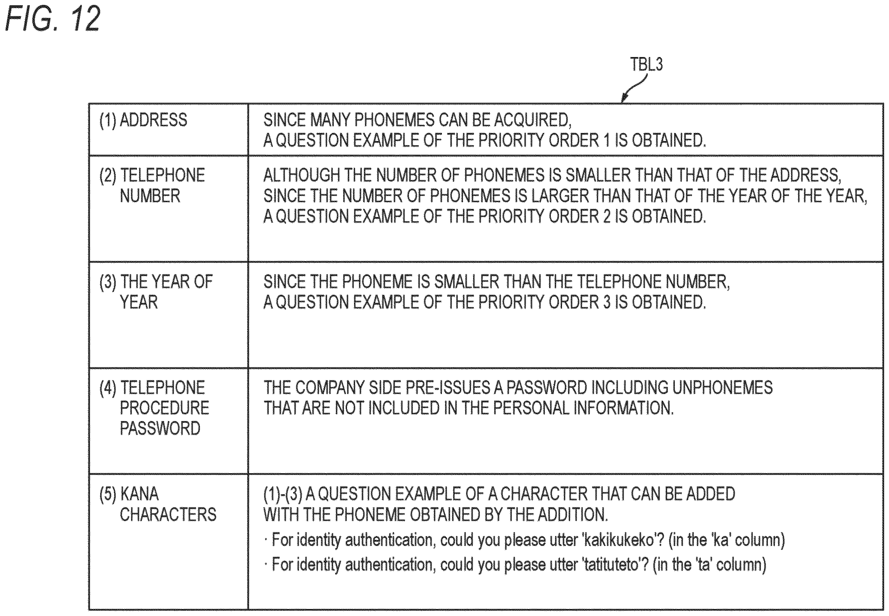

Next, question examples will be described with reference to FIG. 12. FIG. 12 is a diagram showing question examples according to Embodiment 2.

A table TBL3 is an example of items of question example sentences other than the "name" and the "membership number". The items of the question example sentences shown in the table TBL3 are "address", "telephone number", "date of birth", "password for telephone procedure", and "kana character". It is needless to say that these items are merely examples of the items of the question example sentence and are not limited thereto.

Since the "address" in the table TBL3 can acquire more utterance phonemes than the "name" and the "membership number", the "address" is a question example of priority 1.

Since the "telephone number" in the table TBL3 has fewer utterance phonemes than the "address" but has more utterance phonemes than the "date of birth", the "telephone number" is a question example of priority 2.

Since the "date of birth" in the table TBL3 has a smaller number of utterance phonemes than the "telephone number", the "date of birth" is a question example of priority 3.

The "password for telephone procedure" in the table TBL3 is a question example in which a company side issues in advance a password including phonemes that are not included in personal information of "name", "membership number", "address", "telephone number", and "date of birth".

The "kana character" in the table TBL3 is a question example of a kana character to which an utterance phoneme not obtained by an utterance voice signal of the user US corresponding to the question examples of "address", "telephone number", and "date of birth" is added. The utterance phoneme is analyzed by the phoneme analysis unit 21F. For example, in a case where an utterance phoneme in the "ka" column is not obtained, a question example sentence is "For user authentication, could you please utter 'kakikukeko'?", and in a case where an utterance phoneme in the "ta" column cannot be obtained, a question example sentence is "for user authentication, could you please utter 'tatituteto'?".

As described above, the question example sentence is a question sentence that makes the speaker answer at least one of an address, a telephone number, a date of birth, a password including a phoneme not included in personal information of the speaker, or a kana character.

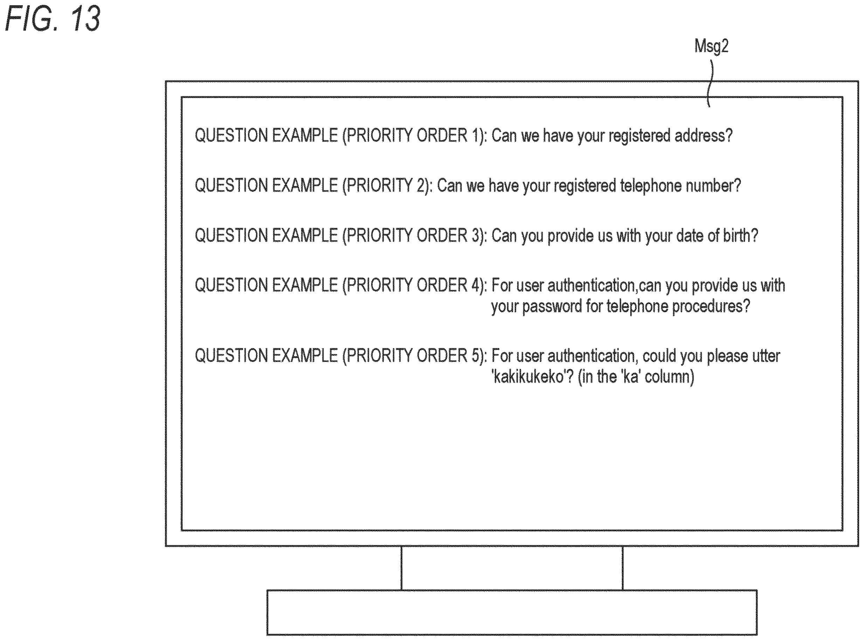

Next, a question example sentence displayed on an information terminal device will be described with reference to FIG. 13. FIG. 13 is a diagram showing the question example sentence displayed on the information terminal device according to Embodiment 2.

A question screen Msg2 is an example of a screen of a question example sentence displayed on the information display terminal DP. A question example sentence related to the question screen Msg2 is selected by the example sentence selection unit 21G. The question screen Msg2 is not limited thereto.

The question screen Msg2 displays, as a question example sentence of priority 1, "Can we have your registered address?". The question screen Msg2 displays, as a question example sentence of priority 2, "Can we have your registered telephone number?". The question screen Msg2 displays, as a question example sentence of priority 3, "Can you provide us with your date of birth?". The question screen Msg2 displays, as a question example sentence of priority 4, "For user authentication, can you provide us with your password for telephone procedures?". The question screen Msg2 displays, as a question example sentence of priority 5, "For user authentication, could you please utter 'kakikukeko'? (in the 'ka' column)".

The question screen Msg2 may display a plurality of question example sentences at one time, or may display only a question example sentence of the highest priority.

Thus, the display I/F 23 displays, on the information display terminal DP, the question example sentence selected by the example sentence selection unit 21G.

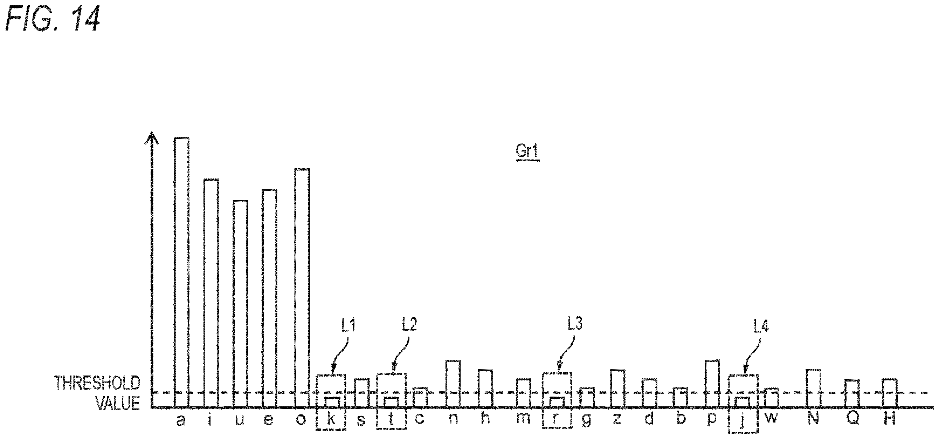

Next, a relation between the number of utterance phonemes calculated by a phoneme analysis unit and a threshold value will be described with reference to FIG. 14. FIG. 14 is a diagram showing a relation between the number of phonemes and the threshold value according to Embodiment 2.

A graph Gr1 is a graph in which the number of utterance phonemes of each utterance phoneme calculated by the phoneme analysis unit 21F is represented by a bar graph. The graph Gr1 shows a predetermined threshold value and an utterance phoneme lower than the threshold value. In the graph Gr1, an utterance phoneme L1 "k", an utterance phoneme L2 "t", an utterance phoneme L3 "r", and an utterance phoneme L4 "j" are utterance phonemes having the number of utterance phonemes equal to or less than the threshold value. The example sentence selection unit 21G may select a question example sentence based on the utterance phonemes L1, L2, L3, and L4. For example, the example sentence selection unit 21G may select, from the question example sentence data storage unit 22C, a question example sentence that can collect at least one of the utterance phonemes L1, L2, L3, and L4 from an utterance voice signal when the user utters. In the graph Gr1, the number of utterance phonemes of each utterance phoneme calculated by the phoneme analysis unit 21F may be arranged in alphabetical order, or may be arranged in order of the number of utterance phonemes. In the graph Gr1, only utterance phonemes included in an utterance voice signal or a connected voice signal are displayed, but utterance phonemes that are not included may also be displayed.

Accordingly, the example sentence selection unit 21G selects a question example sentence that prompts an utterance including an utterance phoneme not included in the utterance voice signal or the connected voice signal, based on the utterance phonemes extracted from the phoneme analysis unit 21F. The example sentence selection unit 21G selects a question example sentence including utterance phonemes whose number is less than a predetermined threshold value based on the number of utterance phonemes of each of the utterance phonemes extracted by the phoneme analysis unit 21F.

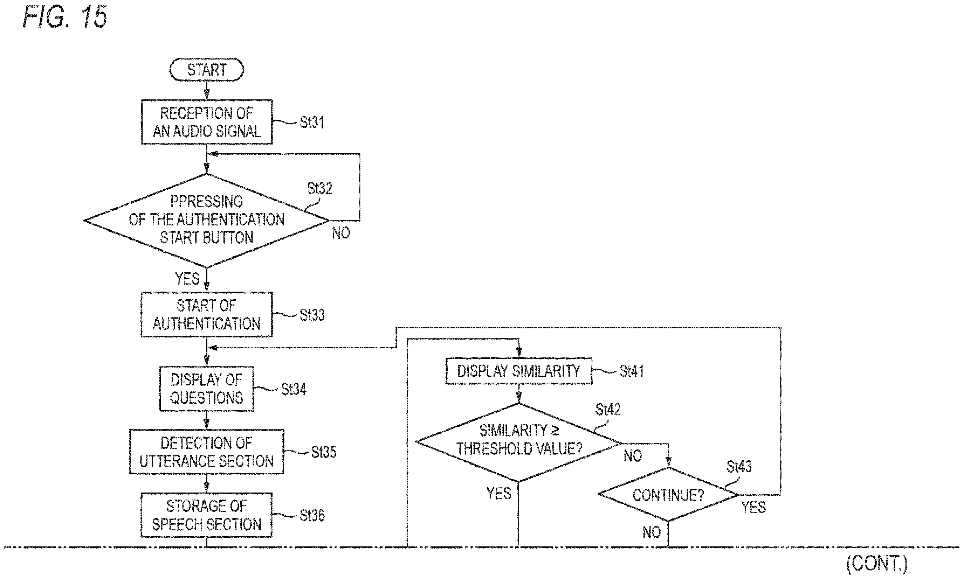

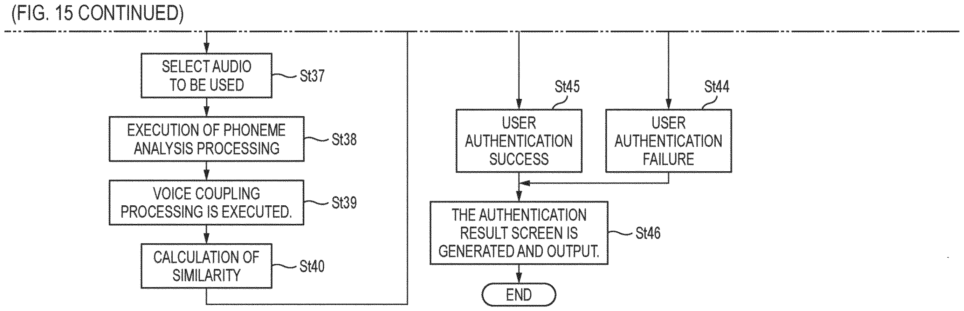

Next, an operation procedure of an authentication analysis device when a question example sentence is displayed immediately after the start of authentication will be described with reference to FIG. 15. FIG. 15 is a flowchart showing an operation procedure example of an authentication analysis device when a question example sentence is displayed immediately after the start of authentication according to Embodiment 2.

The communication unit 20 in the authentication analysis device P2 acquires a voice signal (or voice data) transmitted from the operator-side call terminal OP1 (St31).

The display I/F 23 in the authentication analysis device P2 acquires a signal indicating whether the authentication start button displayed on the information display terminal DP is pressed (St32). When the display I/F 23 does not acquire a signal indicating that the authentication start button is pressed (St32, NO), the display I/F 23 returns to the process of step St31. When the display I/F 23 acquires a signal indicating that the authentication start button is pressed (St32, YES), the display I/F 23 outputs the voice signal acquired by the communication unit 20 to the processor 21H in the process of step St31.

The processor 21H starts the authentication of the user US, which is a voice authentication target of the acquired voice signal, at a timing at which the display I/F 23 acquires the signal indicating that the authentication start button is pressed in the process of step St32 (St33).

The example sentence selection unit 21G acquires a question example sentence from the question example sentence data storage unit 22C, and selects a question example sentence to be displayed on the information display terminal DP. The example sentence selection unit 21G transmits a signal including the content of the selected question example sentence to the display I/F 23. When a signal including the content of the selected question example sentence is acquired, the display I/F 23 displays the question example sentence selected by the example sentence selection unit 21G immediately after the start of authentication (St34).

The utterance section detection unit 21A of the processor 21H detects an utterance section from the acquired voice signal (St14).

The utterance section detection unit 21A stores, in the memory 22H, information on the detected utterance section (for example, a start time and an end time of the utterance section, the number of characters, the number of utterance phonemes, a signal length (an utterance voice length, the number of seconds of an utterance, and the like), and a speech speed before or after speech speed conversion) (St36).

The utterance section detection unit 21A selects one or more utterance voice signals to be used for the user authentication based on a currently set user authentication processing method (St37). Although not shown in FIG. 10, when it is determined that there is no utterance voice signal to be used for the user authentication based on the currently set user authentication processing method, the authentication analysis device P2 may return to the process of step St35 to detect a new utterance section. The utterance section detection unit 21A outputs the selected utterance voice signal to the phoneme analysis unit 21F.

The phoneme analysis unit 21F executes a process of analyzing an utterance phoneme of the utterance voice signal selected in the process of step St37 (St38). The phoneme analysis unit 21F outputs the analyzed utterance voice signal to the utterance connection unit 21B.

The utterance connection unit 21B executes a voice connection process of connecting the selected one or more utterance voice signals to generate a connected voice signal (St39). The utterance connection unit 21B outputs the generated connected voice signal to the similarity calculation unit 21D.

The similarity calculation unit 21D calculates a similarity between an utterance voice signal that the speaker answers to the question example sentence and an utterance voice signal registered in the registered speaker database DB (St40). Although not shown in FIG. 15, the utterance connection unit 21B may output the connected voice signal generated in the process of step St39 to the feature value extraction unit 21C. That is, the similarity calculation unit 21D may refer to an utterance feature value of each of the plurality of users, and calculate a similarity between an utterance feature value of the individual user US output from the feature value extraction unit 21C and an utterance feature value of each of the plurality of users registered in the registered speaker database DB. The similarity calculation unit 21D may calculate a similarity between an utterance feature value of the individual user US and an utterance feature value of a specific user registered in the registered speaker database DB instead of the utterance feature value of each of the plurality of users registered in the registered speaker database DB.

The similarity calculation unit 21D transmits a signal including the calculated similarity to the display I/F 23. When the signal including the similarity is received, the display I/F 23 displays, on the information display terminal DP, a result of the calculated similarity (St41).

The similarity calculation unit 21D determines whether there is a user whose calculated similarity is equal to or larger than a predetermined threshold value among the plurality of users registered in the registered speaker database DB (St42).

When it is determined in the process of step St42 that there is a user whose calculated similarity is equal to or larger than the threshold value among the plurality of users registered in the registered speaker database DB (St42, YES), the similarity calculation unit 21D determines that the user is the user US of the voice signal (St45). When it is determined that there are a plurality of users whose similarities are equal to or larger than the threshold value, the similarity calculation unit 21D may determine that a user having the highest similarity is the user US of the voice signal.

When it is determined that the user is specified, the similarity calculation unit 21D outputs information related to the specified user (that is, an authentication result) to the display I/F 23, the display I/F 23 generates the authentication result screen SC based on the information output by the similarity calculation unit 21D, and outputs the authentication result screen SC to the information display terminal DP (St46).

On the other hand, when the similarity calculation unit 21D determines in the process of step St42 that there is no user whose calculated similarity is equal to or larger than the threshold value among the plurality of users registered in the registered speaker database DB (St42, NO), the similarity calculation unit 21D determines whether authentication of identity confirmation is continued (St43).

When it is determined in the process of step St43 that the current number of times of authentication is equal to or larger than the upper limit value of the predetermined number of times of authentication as a determination as to whether to continue the authentication of the identity confirmation (St43, NO), for example, the similarity calculation unit 21D determines that the user authentication has failed based on the acquired voice signal (St44). The display I/F 23 generates an authentication result screen notifying that the user authentication has failed, and outputs the authentication result screen to the information display terminal DP. The information display terminal DP outputs (displays) the authentication result screen transmitted from the authentication analysis device P2 (St46).

For example, when the similarity calculation unit 21D determines that the current number of times of authentication is equal to or larger than the upper limit value of the predetermined number of times of authentication as a determination as to whether to continue the authentication of the identity confirmation (St43, YES), the similarity calculation unit 21D returns to the process of step St34.

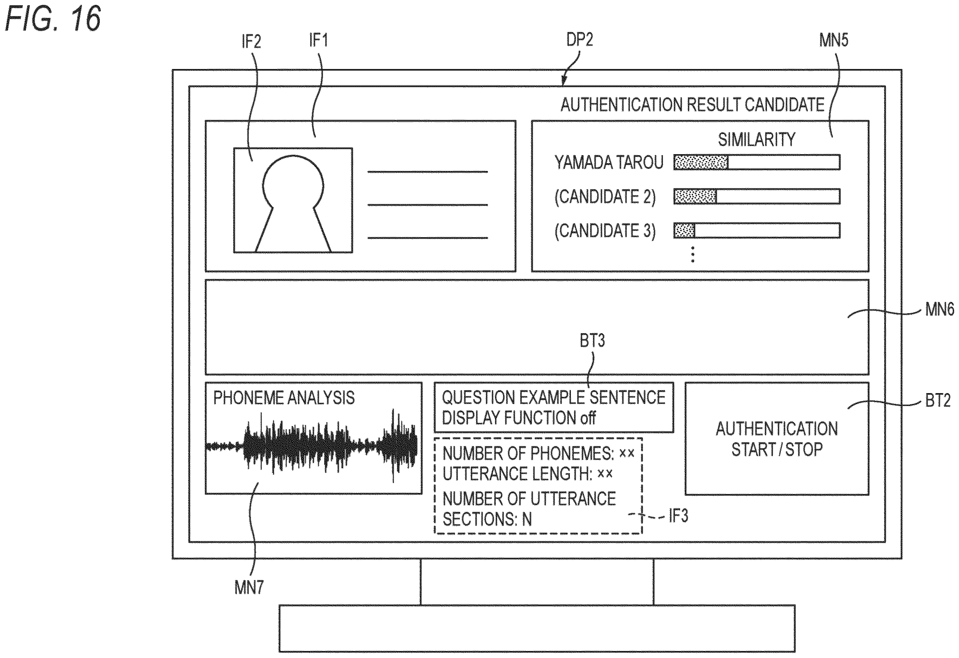

Next, a screen example when a question example sentence display function is off will be described with reference to FIG. 16. FIG. 16 is a diagram showing the screen example when the question example sentence display function according to Embodiment 2 is off.

The display DP2 is a screen example indicating an authentication status displayed on the operator OP.

The information IF1 displays personal information on a candidate of the authentication result. The personal information is a name, a telephone number, an address, or a membership number. The personal information is not limited to those. The information IF1 may display a first candidate of the authentication result or may display a plurality of candidates. The information IF2 displays a face photograph of a candidate of the authentication result.

In an authentication result candidate column MN5, candidates of an authentication result of the identity confirmation are displayed. The authentication result candidate column MN5 may display the name of a candidate

and a probability of the user US for each candidate. The probability of the user US may be a bar meter shown in the authentication result candidate column MN5 in FIG. 8, or may be a percentage. In the authentication result candidate column MN5, the candidates having the highest probability of being the user US may be displayed in order from the top, the candidates may be displayed in kana character order or alphabetical order, or the order of the candidates may be freely set by the operator OP.

A question example sentence display column MN6 displays the question example sentence selected by the example sentence selection unit 21G. In the example of FIG. 16, since the question example sentence display function is off, the question example sentence is not displayed in the question example sentence display column MN6.

A voice signal display column MN7 displays a waveform of the real-time connected voice signal. When the phoneme analysis unit 21F analyzes an utterance phoneme of the connected voice signal, the phoneme analysis unit 21F may display "during phoneme analysis" in the voice signal display column MN7.

A button BT2 is an authentication start/stop button. The operator OP can operate the authentication start and stop of the identity confirmation by pressing the button BT2.

A button BT3 is a button for instructing on/off of the question example sentence display function. The operator OP can operate whether to display a question example sentence in the question example sentence display column MN6 by pressing the button BT3.

The information IF3 displays the number of real-time utterance phonemes, an utterance length (that is, a total time), and the number of utterance sections.

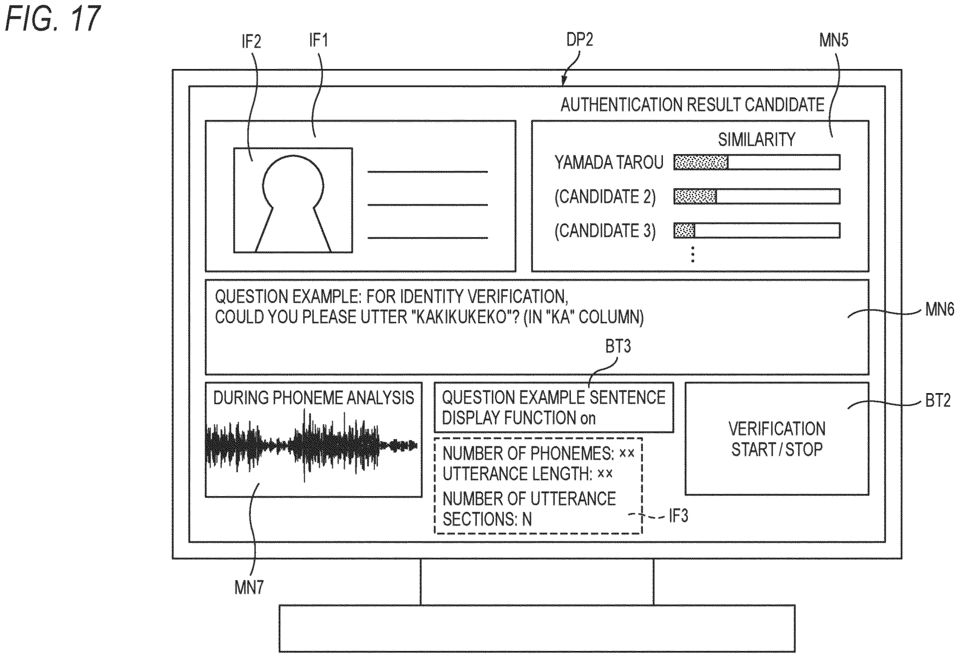

Next, a screen example when the question example sentence display function is on will be described with reference to FIG. 17. FIG. 17 is a diagram showing the screen example when the question example sentence display function according to Embodiment 2 is on. The description of the parts that overlap FIG. 16 will be omitted.

When the operator OP presses the button BT3 and the question example sentence display function is on, the question example sentence selected by the example sentence selection unit 21G is displayed in the question example sentence display column MN6. For example, a "question example: For user authentication, could you please utter 'kakikukeko'? (in the 'ka' column)" is displayed in the question example sentence display column MN6.

The screen examples shown in FIGS. 16 and 17 are merely examples and are not limited thereto.

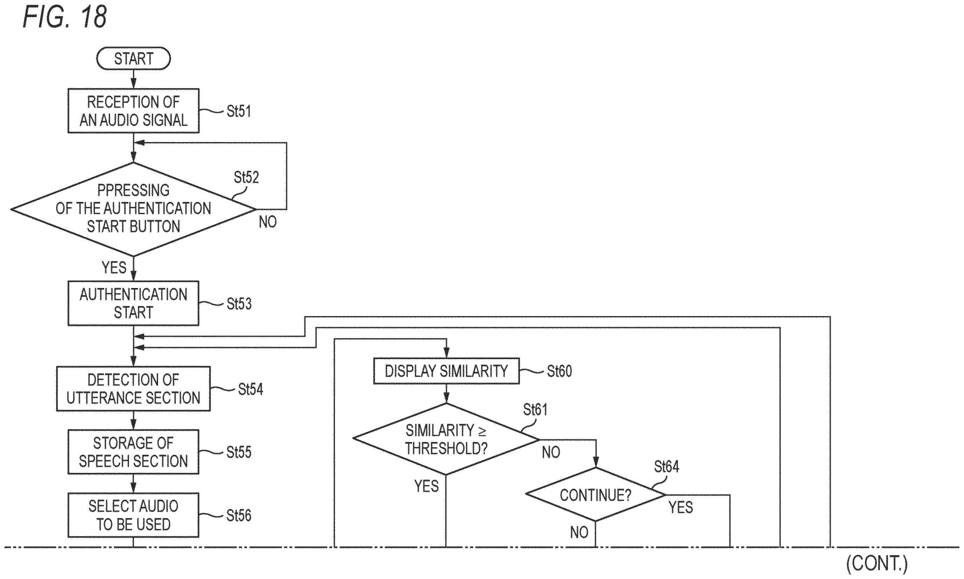

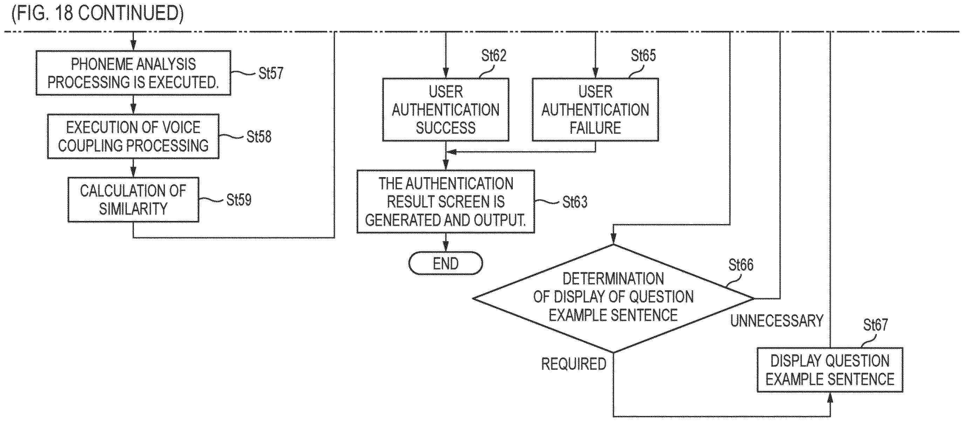

Next, an operation procedure of the authentication analysis device when a question example sentence is displayed during authentication of identity confirmation will be described with reference to FIG. 18. FIG. 18 is a flowchart showing an operation procedure example of the authentication analysis device when a question example sentence is displayed during authentication of identity confirmation according to Embodiment 2.

The communication unit 20 in the authentication analysis device P2 acquires a voice signal (or voice data) transmitted from the operator-side call terminal OP1 (St51).

The display I/F 23 in the authentication analysis device P2 acquires a signal indicating whether the authentication start button displayed on the information display terminal DP is pressed (St52). When the display I/F 23 does not acquire a signal indicating that the authentication start button is pressed (St52, NO), the display I/F 23 returns to the process of step St51. When the display I/F 23 acquires a signal indicating that the authentication start button is pressed (St52, YES), the display I/F 23 outputs the voice signal acquired by the communication unit 20 to the processor 21 in the process of step St51.

The processor 21H starts the authentication of the user US, which is a voice authentication target of the acquired voice signal, at a timing at which the display I/F 23 acquires the signal indicating that the authentication start button is pressed in the process of step St32 (St53).

The utterance section detection unit 21A of the processor 21H detects an utterance section from the acquired voice signal (St54).

The utterance section detection unit 21A stores, in the memory 22H, information on the detected utterance section (for example, a start time and an end time of the utterance section, the number of characters, the number of utterance phonemes, a signal length (an utterance voice length, the number of seconds of an utterance, and the like), and a speech speed before or after speech speed conversion) (St55).

The utterance section detection unit 21A selects one or more utterance voice signals to be used for the user authentication based on a currently set user authentication processing method (St56). Although not shown in FIG. 10, when it is determined that there is no utterance voice signal to be used for the user authentication based on the currently set user authentication processing method, the authentication analysis device P2 may return to the process of step St54 to detect a new utterance section. The utterance section detection unit 21A outputs the selected utterance voice signal to the phoneme analysis unit 21F.

The phoneme analysis unit 21F executes a process of analyzing an utterance phoneme of the utterance voice signal selected in the process of step St56 (St57). The phoneme analysis unit 21F outputs the analyzed utterance voice signal to the utterance connection unit 21B.

The utterance connection unit 21B executes a voice connection process of connecting the selected one or more utterance voice signals to generate a connected voice signal (St58). The utterance connection unit 21B outputs the generated connected voice signal to the similarity calculation unit 21D.

The similarity calculation unit 21D calculates a similarity between an utterance voice signal that the speaker answers to the question example sentence and an utterance voice signal registered in the registered speaker database DB (St59). Although not shown in FIG. 16, the utterance connection unit 21B may output the connected voice signal generated in the process of step St39 to the feature value extraction unit 21C. That is, the similarity calculation unit 21D may refer to an utterance feature value of each of the plurality of users, and calculate a similarity between an utterance feature value of the individual user US output from the feature value extraction unit 21C and an utterance feature value of each of the plurality of users registered in the registered speaker database DB.

The similarity calculation unit 21D transmits a signal including the calculated similarity to the display I/F 23. When the signal including the similarity is acquired, the display I/F 23 displays, on the information display terminal DP, a result of the calculated similarity (St60).

The similarity calculation unit 21D determines whether there is a user whose calculated similarity is equal to or larger than a predetermined threshold value among the plurality of users registered in the registered speaker database DB (St61).

When it is determined in the process of step St61 that there is a user whose calculated similarity is equal to or larger than the threshold value among the plurality of users registered in the registered speaker database DB (St61, YES), the similarity calculation unit 21D determines that the user is the user US of the voice signal (St62). When it is determined that there are a plurality of users whose similarities are equal to or larger than the threshold value, the similarity calculation unit 21D may determine that a user having the highest similarity is the user US of the voice signal.

When it is determined that the user is specified, the similarity calculation unit 21D outputs information related to the specified user (that is, an authentication result) to the display I/F 23, the display I/F 23 generates the authentication result screen SC based on the information output by the similarity calculation unit 21D and outputs the authentication result screen SC to the information display terminal DP (St63).

On the other hand, when the similarity calculation unit 21D determines in the process of step St61 that there is no user whose calculated similarity is equal to or larger than the threshold value among the plurality of users registered in the registered speaker database DB (St61, NO), the similarity calculation unit 21D continues the authentication of the identity confirmation (St64).

When it is determined in the process of step St21 that the current number of times of authentication is equal to or larger than the upper limit value of the predetermined number of times of authentication as a determination as to whether to continue the authentication of the identity confirmation (St64, NO), for example, the similarity calculation unit 21D determines that the user authentication has failed based on the acquired voice signal (St65). The display I/F 23 generates an authentication result screen notifying that the user authentication has failed, and outputs the authentication result screen to the information display terminal DP. The information display terminal DP outputs (displays) the authentication result screen transmitted from the authentication analysis device P2 (St63).

For example, when the similarity calculation unit 21D determines that the current number of times of authentication is equal to or larger than the upper limit value of the predetermined number of times of authentication as a determination as to whether to continue the authentication of the identity confirmation (St64, YES), the similarity calculation unit 21D outputs the determination result to the example sentence selection unit 21G. The example sentence selection unit 21G determines whether to display a question example sentence (St66). The determination as to whether to display the question example sentence may be performed by the similarity calculation unit 21D, may be performed on a predetermined threshold value related to the number of utterance phonemes or the similarity by the example sentence selection unit 21G, or may be performed based on whether the operator OP presses a button as to whether to display the question example sentence displayed on the information display terminal DP.

When it is determined that display of the question example sentence is unnecessary (St66, unnecessary), the example sentence selection unit 21G returns to the process of step St54. When it is determined that the display of the question example sentence is necessary (St66, necessary), the example sentence selection unit 21G outputs the determination result to the display I/F 23. The display I/F 23 displays a question example sentence on the information display terminal DP (St67), and returns to the process of step St54.

Accordingly, in the operation procedure example of the authentication analysis device P2 in FIG. 18, the processor 21H calculates a similarity between an utterance voice signal acquired after the start of the authentication and a voice signal registered in the registered speaker database DB. When the similarity is equal to or less than a predetermined threshold value, the processor 21H determines whether the display of the question example sentence is necessary. When the display I/F23 acquires a determination result that the display of the question example sentence is necessary by the processor 21H, the display I/F23 displays, on the information display terminal DP, the question example sentence selected by the example sentence selection unit 21G.

As described above, the authentication analysis device P2 according to Embodiment 2 includes: the utterance section detection unit 21A that acquires and detects a voice signal of an utterance voice of a speaker; the processor 21H that authenticates whether the speaker is the person himself/herself based on collation between the voice signal and the registered speaker database DB; the question example sentence data storage unit 22C that stores, as a question example sentence, a plurality of questions for acquiring a voice signal used for authentication of the speaker by the processor 21H; the display interface 23 that displays the question example sentence for the speaker on the information display terminal DP; and the example sentence selection unit 21G that selects a question example sentence to be displayed on the information display terminal DP from the plurality of question example sentences stored in the question example sentence data storage unit 22C.

Accordingly, the authentication analysis device P2 can select a question example sentence in order to acquire a voice signal necessary for the authentication of the identity confirmation of the speaker and display the question example sentence on the information display terminal DP. Accordingly, the operator OP can perform authentication of the identity confirmation of the customer with high accuracy.

The authentication analysis device P2 according to Embodiment 2 further includes the phoneme analysis unit 21F that extracts utterance phonemes included in a voice signal of the speaker detected by the utterance section detection unit 21A. The example sentence selection unit 21G selects a question example sentence that prompts an utterance including an utterance phoneme not included in the voice signal, based on the utterance phonemes extracted from the phoneme analysis unit 21F. Accordingly, the authentication analysis device P2 can select a question example sentence for extracting uncollected utterance phonemes. Accordingly, the operator OP can efficiently perform the authentication of the identity confirmation of the speaker.

The display I/F 23 according to Embodiment 2 displays, on the information display terminal DP, the question example sentence selected by the example sentence selection unit 21G. Accordingly, the operator OP can ask the customer a question example sentence for extracting uncollected utterance phonemes, and the authentication of the identity confirmation of the customer can be performed with high accuracy.

The display I/F 23 according to Embodiment 2 displays, on the information display terminal DP, the question example sentence selected by the example sentence selection unit 21G immediately after the start of the authentication. The processor 21H calculates a similarity between a voice signal of an utterance voice that the speaker answers to the question example sentence and a voice signal registered in the registered speaker database DB, and authenticates the speaker when the similarity is equal to or larger than a predetermined threshold value. Accordingly, the operator OP can ask the speaker a question example sentence for smoothly extracting an utterance phoneme necessary for the authentication of the identity confirmation of the speaker. Accordingly, the operator OP can efficiently perform the authentication of the identity confirmation of the speaker.

The processor 21H according to Embodiment 2 calculates a similarity between a voice signal acquired after the start of the authentication and a voice signal registered in the registered speaker database DB, and determines whether the display of the question example sentence is necessary when the similarity is equal to or less than a predetermined threshold value. When the display I/F23 acquires a determination result that the display of the question example sentence is necessary by the processor 21H, the display I/F23 displays, on the information display terminal DP, the question example sentence selected by the example sentence selection unit 21G. Accordingly, the authentication analysis device P2 displays, on the information display terminal DP, a question example sentence for extracting an utterance phoneme necessary for authentication of identity confirmation. Accordingly, the operator OP can perform authentication of the identity confirmation of the customer with high accuracy.

The phoneme analysis unit 21F according to Embodiment 2 calculates the number of extracted phonemes. The example sentence selection unit 21G selects a question example sentence including an utterance phoneme in which the number of utterance phonemes is less than a predetermined threshold value. Accordingly, the authentication analysis device P2 can display, on the information display terminal DP, a question example sentence for extracting utterance phonemes whose number is less than a threshold value among the collected utterance phonemes. Accordingly, the operator OP can perform authentication of the identity confirmation of the customer with high accuracy.

When a signal indicating that the authentication start button displayed on the information display terminal DP is pressed is acquired, the processor 21H according to Embodiment 2 starts authentication from the voice signal input after acquisition of the signal. Accordingly, since the start of the authentication of the identity confirmation of the speaker can be performed by an operation of the operator OP, it is possible to notify that the start of the authentication is performed before the operator OP starts the authentication to the user US. In addition, authentication may not be performed when authentication is not necessary in the determination of the operator OP.

The question example sentence according to Embodiment 2 is a question sentence that makes the speaker answer at least one of an address, a telephone number, a date of birth, a password including a phoneme not included in personal information of the speaker, or a kana character. Accordingly, the authentication analysis device P2 can efficiently acquire an utterance voice signal used for the authentication of the identity confirmation. Accordingly, the operator OP can perform the authentication of the identity confirmation with high accuracy, and can perform the authentication with high efficiency in a short time.

Although the embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, constituent elements in the embodiments described above may be freely combined without departing from the gist of the invention.

The present application is based on Japanese Patent Application No. 2021-197229 filed on December 3, 2021, and the contents thereof are incorporated herein by reference.

### INDUSTRIAL APPLICABILITY

The technique of the present disclosure is useful in providing an authentification device and an authentification method that enable an operator to confirm an authentication status of identity confirmation of a customer in real time, support improvement in work efficiency of the operator, and perform authentication of identity confirmation with high accuracy.

### REFERENCE SIGNS LIST

NW: network
UP1: user-side call terminal
OP1: operator-side call terminal
US: user
OP: operator
COM11, COM12, COM13, COM14, COM15, COM16, COM17, COM18: utterance voice
P1, P2: authentication analysis device
DB: registered speaker database
DP: information display terminal
SC: authentication result screen
20: communication unit
21, 21H: processor
21A: utterance section detection unit
21B: utterance connection unit
21C: feature value extraction unit
21D: similarity calculation unit
21E: reliability calculation unit
21F: phoneme analysis unit
21G: example sentence selection unit
22, 22H: memory
21J: voice analysis unit
22A: ROM
22B: RAM
22C: question example sentence data storage unit
23: display I/F
24: emotion identifier
TBL1, TBL2, TBL3: table
C1, C2, C3: utterance content
Ba1, Ba2, Ba3, Ba4, Ba5, Ba6: reliability
UI: authentication start button
Wa1: emotion waveform
S1, S2, S3, S4, S5, S6, S7, S8, S9, S10, S11, S12, S13, S14: section
Sig2, Sig3, Sig4, Sig5, Sig6, Sig7, Sig8, Sig9, Sig10: voice signal waveform
DP1, DP2: display
MN1: candidate information column
MN2, MN5: authentication result candidate column
MN3, MN7: voice signal display column
MN4: authentication result reliability meter
MN6: question example sentence display column
Msg1: message
Msg2: question screen
BT1, BT2, BT3
Gr1: graph
L1, L2, L3, L4: phoneme
IF1, IF2, IF3: information

## Claims

1. An authentification device comprising:
an acquisition unit configured to acquire and detect a voice signal of an utterance voice of a speaker;
an authentication unit configured to authenticate whether the speaker is the person himself/herself based on collation between the voice signal detected by the acquisition unit and a database; and
a display interface configured to display, on a terminal device, an authentication status indicating whether the speaker is the person himself/herself based on an authentication result of the authentication unit, wherein
the display interface updates a display content of the authentication status of the speaker by the authentication unit every time the authentication status changes.

2. The authentification device according to claim 1, wherein
the authentication unit calculates a total time of the voice signals and the number of types of voices included in the voice signals, and determines a first reliability based on the total time and a second reliability based on the number of types of voices based on calculation results of the total time and the number of types of voices and a predetermined determination reference.

3. The authentification device according to claim 2, wherein
the authentication unit determines the higher one of the first reliability and the second reliability as a reliability corresponding to the voice signal.

4. The authentification device according to claim 2, wherein
the authentication unit determines the lower one of the first reliability and the second reliability as a reliability corresponding to the voice signal.

5. The authentification device according to any one of claims 1 to 4, wherein
when a signal indicating that an authentication start button displayed on the terminal device is pressed is acquired, the authentication unit starts authentication from the voice signal input after the acquisition of the signal.

6. The authentification device according to claim 1, further comprising
an emotion identifier configured to detect the intensity of an emotion of the speaker during a conversation based on the voice signal, wherein
the authentication unit determines whether a detection result of the intensity of the emotion is equal to or larger than a predetermined threshold value, and deletes voice signals in a voice section in which the intensity of the emotion is equal to or larger than the predetermined threshold value.

7. The authentification device according to claim 1, further comprising
an emotion identifier configured to detect the intensity of an emotion of the speaker during the conversation based on a voice signal, wherein
the authentication unit determines whether a detection result of the intensity of the emotion is equal to or larger than a predetermined threshold value,
the display interface displays a result of the determination on the terminal device, and
voice signals in a voice section selected by a user operation on the result of the determination displayed on the terminal device by the display interface are deleted.

8. The authentification device according to claim 1, wherein
the authentication unit performs voice recognition on the voice signal, detects voice sections in which the utterance contents overlap with each other in a voice recognition result of the voice signals, and deletes voice signals in the detected overlapped voice sections.

9. The authentification device according to claim 1, wherein
the display content has at least an authentication result candidate of the speaker and an authentication result reliability of the authentication.

10. An authentification method performed by one or more computers, the authentication method comprising:
acquiring and detecting a voice signal of an utterance voice of a speaker;
authenticating whether the speaker is the person himself/herself based on collation between the voice signal detected by the acquisition unit and a database;
displaying an authentication status indicating whether the speaker is the person himself/herself based on an authentication result; and
updating a display content of the authentication status every time the authentication status of the speaker changes.
